(19) Europäisches Patentamt
European Patent Office
Office européen des brevets

(11) **EP 4 682 591 A1**

(12) **EUROPEAN PATENT APPLICATION**
published in accordance with Art. 153(4) EPC

(43) Date of publication:
**21.01.2026 Bulletin 2026/04**

(21) Application number: **24770971.0**

(22) Date of filing: **14.03.2024**

(51) International Patent Classification (IPC):
**G01T 1/167** (2006.01) **G01T 1/20** (2006.01)
**G01T 7/02** (2006.01)

(52) Cooperative Patent Classification (CPC):
**G01T 1/167; G01T 1/20; G01T 7/02**

(86) International application number:
**PCT/JP2024/010001**

(87) International publication number:
**WO 2024/190868 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.03.2023 JP 2023041440**

(71) Applicants:
• **Techno Bridge Co., Ltd.**
**Osaka-shi, Osaka 531-0073 (JP)**
• **Imageone Co., Ltd.**
**Tokyo 141-0032 (JP)**

(72) Inventors:
• **TANIGUCHI Kazuo**
**Osaka-shi, Osaka 531-0073 (JP)**
• **YAMAMOTO Hirofumi**
**Osaka-shi, Osaka 531-0073 (JP)**

(74) Representative: **Dunleavy, Christopher Squire et al**
**Venner Shipley LLP**
**406 Cambridge Science Park**
**Milton Road**
**Cambridge CB4 0WW (GB)**

(54) **RADIATION DETECTING DEVICE AND RADIATION MEASURING DEVICE**

(57) A radiation detection apparatus detects trace amounts of radioactive substance, and comprises a scintillator column and a photodetector. The scintillator column includes a plurality of bar-like solid scintillators and a support member that fixedly supports respective solid scintillators, and is arranged within a test path. The support member supports both end portions of the plurality of solid scintillators so that the plurality of solid scintillators are in a predetermined arrangement relationship where the plurality of solid scintillators are separated from each other with small gaps through which a test sample can pass. The solid scintillator emits faint light in response to contact with the radioactive substance when the test sample passes while contacting to circumferential surface, and confines the light inside and leads the light to both end portions. A plurality of photomultipliers are arranged outside the test path at positions opposite to the both end portions to detect the light.

FIG. 1

## Description

### Field of art

This disclosure is related to a radiation detection apparatus and a radiation measurement apparatus, more specifically, a radiation detection apparatus that detects or measures a trace amount of radiation such as tritium contained in a liquid sample and a radiation measurement apparatus using the same.

### Related art

Tritium is a β ray (beta ray), and can be hardly measured by a normal radiation detector because energy thereof is very low as such less than 10 keV. Therefore, in general, a liquid scintillation measuring method using a liquid scintillator had been employed as to a liquid of a low-energy beta ray such as tritium.

In the liquid scintillation measuring method, a liquid scintillator is mixed into a liquid sample, and then, light emitted in reaction with the beta ray that is emitted from tritium is measured.

It is impossible to measure a large volume of liquid sample by the liquid scintillation measuring method because the liquid scintillator that is an organic solvent is to be mixed. For example, the liquid sample may be equal to or less than 100 mL. Furthermore, since the liquid scintillator that is an organic solvent is mixed with the liquid sample, it is impossible to release the liquid sample to outside environments (sea etc.).

Furthermore, in the liquid scintillation measuring method, it takes several days or more to obtain results for precise measurements. Therefore, there is a problem that the liquid scintillation measuring method is not suitable for continuous measurement because even if a numeral value of tritium concentration exceeding a control standard is confirmed in a certain measurement, this result is from several days ago.

Against such a liquid scintillation measuring method, a technology that is detectable tritium using a solid scintillator is disclosed in Patent Literatures 1 - 4.

### Literature of related art

### Patent Literature

Patent Literature 1: Japanese Patent Application Laying-open No. 2007-178336
Patent Literature 2: Japanese Patent Application Laying-open No. S54-123987
Patent Literature 3: Japanese Patent Application Laying-open No. S55-128179
Patent Literature 4: WO088/006297

### Summary of invention

### Problem to be solved by invention

Patent Literature 1 discloses a technology in which tritium is detected with structure that a plate-like solid scintillator is provided on each of both surfaces of a sampling vessel and light detected by the plate-like solid scintillators is led to a photomultiplier via a light guide. In the technology disclosed in Patent Literature 1, attenuation is large in detecting tritium that has only low energy since the plate-like solid scintillator and the light guide are used, and therefore, detection precision is not good.

Patent Literature 2 discloses a technology in which a plurality of plate-like plastic scintillators are arranged in parallel with each other. In the technology disclosed in Patent Literature 2, since tritium is largely attenuated when advancing in a thickness direction of the plate-like plastic scintillator, it is impossible to detect and measure tritium having only low energy with high precision.

Patent Literature 3 also discloses a technology using a plastic scintillator. The plastic scintillator is constructed by adhering a plastic scintillator film on a surface of a transparent round bar that has no luminescent effect on incoming radiation. The technology disclosed in Patent Literature 3 is a technology in which a plurality of plastic scintillators are bundled with predetermined gaps, and accommodated in a sample chamber that is formed by partitioning a light-shielded container with partitioning plates

The technology in Patent Literature 3 is unsuitable for tritium detection since an energy amount is low and thus an amount of photons to be generated is very small in case where a test target is beta ray such as tritium.

This is because the plastic scintillator to which the film is adhered only emits light at a surface of the film when beta rays such as tritium come into contact with the surface of the film, and it is difficult to efficiently lead the light to both ends through the thin film. Moreover, since the light does not enter an inside of the transparent round bar with no luminescent effect originally and thus is not propagated in the inside, attenuation of the light in a length direction of the film portion is large, and therefore, it is difficult to detect the beta ray with high precision.

Patent Literature 4 discloses a technology in which radioisotope is detected by a photodetector provided at end portions of a plurality of optical fibers that are doped with a scintillation substance are immersed in a liquid and have ends to be joined together.

However, since the technology of Patent Literature 4 cannot allow passing a liquid sample between the plurality of optical fibers, it is impossible to detect the beta ray of low energy (especially, extremely trace amount of tritium).

Therefore, this disclosure provides a novel radiation detection apparatus and radiation measurement apparatus.

This disclosure provides a radiation detection apparatus and radiation measurement apparatus, which is capable of detecting a low-energy radioactive substance such as tritium with high precision even low concentration.

**Means for solving problem**

A first embodiment of this disclosure is a radiation detection apparatus for detecting a radioactive substance contained in a test sample supplied to a measurement chamber, comprising: a scintillator column that includes a plurality of longitudinal solid scintillators and a support member for fixedly supporting the plurality of solid scintillators, and is arranged in the measurement chamber, wherein the support member has structure that supports both end portions of the plurality of solid scintillators so that the plurality of solid scintillators are in a predetermined arrangement relationship that the plurality of solid scintillators are separated from each other with small gaps through which the test sample can pass, and each of the plurality of solid scintillators emits light in response to contact with the radioactive substance contained in the test sample, and confines the light inside and leads the light to the both ends in a longitudinal direction, further comprising: a first photodetector arranged outside a test path in a position opposite to one end portion of each of the solid scintillators; and a second photodetector arranged outside the test path in a position opposite to another end portion of each of the solid scintillators.

In the first embodiment, the radiation detection apparatus comprises the scintillator column arranged in the measurement chamber, and detects the radioactive substance contained in the testing sample that is supplied to the measurement chamber. The scintillator column includes the support member by which the plurality of longitudinal solid scintillators are fixedly supported. The support member has structure that supports both end portions of the plurality of solid scintillators so that the plurality of solid scintillators are in a predetermined arrangement relationship that the plurality of solid scintillators are separated from each other with the small gaps through which the test sample can pass, and each of the plurality of solid scintillators emits light in response to contact with the radioactive substance contained in the test sample, and confines the light an inside thereof and leads the light to the both ends in the longitudinal direction, and the radiation detection apparatus further comprises the first photodetector arranged outside the test path in the position opposite to one end portion of each solid scintillator and the second photodetector arranged outside the test path in the position opposite to the other end portion of each solid scintillator.

According to the first embodiment, since each of the solid scintillators confines the light excited with the radiation in its inside and leads the light to its both ends of the longitudinal direction efficiently, attenuation of the light is small, and therefore, it is possible, not using the liquid scintillator, to realize a radiation detection apparatus that can detect a low-energy radioactive substance such as tritium with high precision even low concentration.

A second embodiment is the radiation detection apparatus according to the first embodiment, wherein the scintillator column includes a plurality of scintillator groups each including a plurality of solid scintillators, and the first photodetector and the second photodetector are respectively provided in plural number corresponding to the plurality of scintillator groups and each first photodetector and each second photodetector receive the light from the plurality of solid scintillators included in the corresponding scintillator group.

According to the second embodiment, it is possible to obtain a radiation detection apparatus that can reduce an influence of phosphorescent components by using a pair of photodetectors with respect to each scintillator group.

A third embodiment is the radiation detection apparatus according to the first embodiment, wherein the support member is formed in a frame shape including a pair of plate-like portions, one plate-like portion and another plate-like portion of the pair of plate-like portions have holding portions formed at a plurality of positions corresponding to each other, and the support member supports the plurality of solid scintillators by holding one end portion and another end portion of each of the solid scintillators with corresponding holding portions of the pair of plate-like portions.

According to the third embodiment, it is possible to obtain a radiation detection apparatus that can securely hold the plurality of solid scintillators in predetermined positions.

A fourth embodiment is the radiation detection apparatus according to the third embodiment, wherein the holding portions include throughholes formed at the plurality of positions corresponding to each other in the one plate-like portion and the other plate-like portion of the pair of plate-like portions, and each of the solid scintillators is held by the throughholes formed at positions corresponding to each other.

A fifth embodiment is the radiation detection apparatus according to the third embodiment, wherein the holding portions include holding fixtures respectively provided at the plurality of positions corresponding to each other on inner surfaces opposite to each other of the one plate-like portion and the other plate-like portion of the pair of plate-like portions, and each of the solid scintillators is held by the holding fixtures provided at positions corresponding to each other.

A sixth embodiment is the radiation detection apparatus according to the third embodiment, wherein the first photodetector is arranged to face the one end portion in the longitudinal direction of each solid scintillator and to be brought into contact to the one plate-like portion and the second photodetector is arranged to face the other end portion in the longitudinal direction of each solid scintillator and to be brought into contact to the other plate-like portion, and both a first electrical signal detected by the first photodetector and a second electrical signal detected by the second photodetector are utilized to detect a radiation concentration in the test sample.

According to the sixth embodiment, since the first photodetector and the second photodetector can surely catch the light from each solid scintillator, it is possible to obtain the first electrical signal and the second electrical signal that accurately reflect the radiation concentration of the test sample in the measurement chamber.

A seventh embodiment is the radiation detection apparatus according to the first embodiment, wherein the support member arranges the plurality of solid scintillators in a matrix manner by arranging the plurality of solid scintillators with predetermined gaps in a longitudinal direction and in a lateral direction.

An eighth embodiment of this disclosure is a radiation measurement apparatus for detecting a concentration of radioactive substance contained in a test sample supplied to a measurement chamber, comprising: a scintillator column that includes a plurality of longitudinal solid scintillators and a support member for fixedly supporting the plurality of solid scintillators, and is arranged in the measurement chamber, wherein the support member has structure that supports both end portions of the plurality of solid scintillators so that the plurality of solid scintillators are in a predetermined arrangement relationship that the plurality of solid scintillators are separated from each other with small gaps through which the test sample can pass, and each of the plurality of solid scintillators emits light in response to contact with the radioactive substance included in the test sample, and confines the light inside and leads the light to the both ends in a longitudinal direction, further comprising: a first photodetector arranged outside the measurement chamber in a position opposite to one end portion of each of the solid scintillators, which receiving the light from the corresponding plurality of solid scintillators and outputting an electrical signal according to an amount of the light received; a second photodetector arranged outside the measurement chamber in a position opposite to another end portion of each of the solid scintillators, which receiving the light from the corresponding plurality of solid scintillators and outputting an electrical signal according to an amount of the light received; a first wave-height analysis portion that processes the electrical signal that is output from the first photodetector to output a first electrical signal; a second wave-height analysis portion that processes the electrical signal that is output from the second photodetector to output a second electrical signal; a coincidence judgment portion that judges whether the first electrical signal and the second electrical signal occur within a coincidence judgment time period and presumes that the first electrical signal and the second electrical signal are significant signals when it is judged that the first electrical signal and the second electrical signal occur within the coincidence judgment time period; and a concentration calculation portion that obtains a radiation concentration based on a cumulative value, for each channel, of an addition value of a first wave-height value of the first electrical signal and a second wave-height value of the second electrical signal presumed by the coincidence judgment portion to be significant electrical signals.

In the eighth embodiment, the detection apparatus according to the first embodiment is utilized. The first photodetector of the detection apparatus receives the light from the corresponding plurality of solid scintillators and outputs the electrical signal according to an amount of the light. The second photodetector of the detection apparatus receives the light from the corresponding plurality of solid scintillators and outputs the electrical signal according to an amount of the light. The first wave-height analysis portion processes the electrical signal that is output from the first photodetector to output the first electrical signal, and the second wave-height analysis portion that processes the electrical signal that is output from the second photodetector to output the second electrical signal. The first electrical signal and the second electrical signal are brought to the coincidence judgment portion, and the coincidence judgment portion judges whether the first electrical signal and the second electrical signal occur within the coincidence judgment time period. That is, when it is determined that the first electrical signal and the second electrical signal occur within the coincidence judgment time period, the first electrical signal and the second electrical signal are made to be significant electrical signals. On the other hand, when it cannot be judged that the first electrical signal and the second electrical signal occur within the coincidence judgment time period, the first electrical signal and the second electrical signal are discarded while presuming the first electrical signal and the second electrical signal are noise signals. The radiation concentration can be obtained by the concentration calculation portion based on the cumulative value, for each channel, of the addition value of the first wave-height value of the first electrical signal and the second wave-height value of the second electrical signal presumed by the coincidence judgment portion to be significant electrical signals.

According to the eighth embodiment, since the radiation concentration can be obtained based on the cumulative value, for each channel, of the addition value of the first wave-height value of the first electrical signal and the second wave-height value of the second electrical signal that are judged by the coincidence judgment portion as coincidence, an influence of the noise that is not coincidence can be effectively excluded.

A ninth embodiment is the radiation measurement apparatus according to the eighth embodiment, wherein the concentration calculation portion includes a storage portion that stores for each channel the cumulative value of the addition value of the first wave-height value of the first electrical signal and the second wave-height value of the second electrical signal presumed by the coincidence judgment portion to be significant electrical signals, and a calculation portion that obtains a spectrum based on the cumulative value for each channel stored in the storage portion within a predetermined time period, whereby the concentration of the radiation that is a measurement target can be calculated based on an integrated intensity of a specific spectrum.

In the ninth embodiment, the storage portion stores the cumulative value of the addition value of the first wave-height value of the first electrical signal and the second wave-height value of the second electrical signal for each channel, and the calculation portion obtains a spectrum based on the cumulative value, and then, calculates the radiation concentration of the measurement target based on the integrated intensity of a specific spectrum (spectrum of tritium being an example of measurement target).

A tenth embodiment is the radiation measurement apparatus according to the ninth embodiment, wherein the calculation portion includes a threshold value discrimination portion that extracts a spectrum of the radioactive substance that is the measurement target by performing threshold discrimination with a predetermined threshold value for a plurality kinds of spectrums contained in the spectrum, and obtains a concentration of the radioactive substance from the integrated intensity of extracted spectrum of the radioactive substance, and it is judged that the measurement sample contains the radiation substance exceeding a predetermined standard value when it is determined that the concentration exceeds the predetermined standard value.

In the tenth embodiment, the threshold discrimination portion extracts only the specific spectrum (spectrum of tritium that is an example of measurement target) by performing the threshold discrimination of the plurality kinds of spectrums with a lower limit value (LLD) of a region of interest (ROI) that is set in advance, and the calculation portion obtains the concentration of the radioactive substance that is the measurement target based on the integrated intensity of the extracted specific spectrum. Then, when it is determined that the concentration exceeds the predetermined standard value, it is judged that measurement sample contains the radioactive substance exceeding the standard value.

According to the tenth embodiment, it is possible to extract only the spectrum of the measurement target based on the cumulative value of the addition value by suitably setting the threshold value of the region of interest (ROI). Therefore, it is possible obtain the concentration of the radiation of the measurement target simply and precisely.

An eleventh embodiment is the radiation measurement apparatus according to the ninth embodiment, wherein the scintillator column includes a plurality of scintillator groups each including a plurality of solid scintillators, and the first photodetector and the second photodetector are respectively provided in plural number corresponding to the plurality of scintillator groups and each first photodetector and each second photodetector receive the light from the plurality of solid scintillators included in the corresponding scintillator group, and the first wave-height analysis portion, the second wave-height analysis portion, the coincidence judgment portion and the storage portion are provided to be related with each of the plurality of first photodetectors and each of the plurality of second photodetectors, respectively.

In the eleventh embodiment, the scintillator column similar to the scintillator column in the second embodiment, and a signal processing system including the first wave-height analysis portion, the second wave-height analysis portion, the coincidence judgment portion and the storage portion is set with respect to each first photodetector and each second photodetector, respectively.

According to the eleventh embodiment, the radiation measurement apparatus capable of reducing the influence of the phosphorescent components by using a pair of photodetectors with respect to each scintillator group is obtainable.

A twelfth embodiment is the radiation measurement apparatus according to the eighth embodiment, wherein the support member is formed in a frame shape including a pair of plate-like portions, one plate-like portion and another plate-like portion of the pair of plate-like portions have holding portions formed at a plurality of positions corresponding to each other, and the support member supports the plurality of solid scintillators by holding one end portion and another end portion of each of the solid scintillators with corresponding holding portions of the pair of plate-like portions.

According to the twelfth embodiment, it is possible to obtain the radiation measurement apparatus that can securely hold, in the scintillator column, the plurality of solid scintillators in the predetermined positions.

## Advantage of invention

According to this disclosure, since each of the solid scintillators confines the light excited with the radiation in its inside and leads the light to its both ends of the longitudinal direction efficiently, attenuation of the light is small, and therefore, it is possible, not using the liquid scintillator, to obtain the radiation detection apparatus and the radiation measurement apparatus, in which a low-energy radioactive substance such as tritium can be detected with high precision even low concentration.

Moreover, according to this disclosure, the radiation detection apparatus and the radiation measurement apparatus suitable for continuously measuring a low-energy radioactive substance such as tritium are obtained.

The features and advantages of this disclosure will become more apparent from the following detailed description when taken in conjunction with the accompanying drawings.

**Brief description of drawings**

Figure 1 is a view showing a detection principle in a radiation detection apparatus that is an embodiment according to this disclosure, Figure 1(A) being a view seen from the front and Figure 1(B) being a view seen from the side.

Figure 2 is an exploded perspective view showing a scintillator column included in the radiation detection apparatus of Figure 1 embodiment.

Figure 3 is a schematic diagram showing a case where tritium is detected using a bar-like solid scintillator included in the radiation detection apparatus of Figure 1 embodiment.

Figure 4 is a view showing a radiation detection apparatus of another embodiment according to this disclosure, Figure 4(A) being a view seen from the front and Figure 4(B) being a view seen from the side.

Figure 5 is a view showing another example of a support member in the radiation detection apparatus of Figure 4 embodiment, Figure 5(A) showing a holding fixture and Figure 5(B) showing a using manner of the holding fixture.

Figure 6 is a view showing a radiation detection apparatus of a further embodiment according to this disclosure.

Figure 7 is a view showing an example of a radiation measurement apparatus that measures tritium using the radiation detection apparatus of Figure 6 embodiment.

Figure 8 is a block diagram showing structure of the radiation measurement apparatus of Figure 7 embodiment.

Figure 9 is a view showing a tritium spectrum as a typical measurement result of tritium.

Figure 10 is a view showing a coincidence spectrum for each threshold value of an ROI (region of interest) when tritium is measured using the radiation measurement apparatus of Figure 7 embodiment.

Figure 11 is a view showing dependency between a tritium concentration and a coincidence judgment time period when measuring tritium using the radiation measurement apparatus of Figure 7 embodiment, Figure 11(A) being a graph showing the dependency of the tritium concentration and the coincidence judgment time period and Figure 11(B) being a graph showing an intensity change when the coincidence of tritium is long.

Figure 12 is a view showing another embodiment of the radiation measurement apparatus that measures tritium using the radiation detection apparatus of Figure 6 embodiment.

Figure 13 is a view showing an example of the coincidence judgment time period, Figure 13(A) showing an example of a propagation manner of the light in an inside of the solid scintillator, Figure 13(B) showing a signal detected by one photomultiplier and Figure 13(C) showing a signal detected by another photomultiplier.

Figure 14 is a view showing another example of the coincidence judgment time period, Figure 14(A) showing an example of a propagation manner of the light in the inside of the solid scintillator, Figure 14(B) showing a signal detected by the one photomultiplier and Figure 14(C) showing a signal detected by the other photomultiplier.

Figure 15 is a view showing a further example of the coincidence judgment time period, Figure 15(A) showing an example of a propagation manner of the light in the inside of the solid scintillator, Figure 15(B) showing a signal detected by the one photomultiplier and Figure 15(C) showing a signal detected by the other photomultiplier.

Figure 16 is a view showing an example of a data storage in Figure 12 embodiment.

Figure 17 is a part of a flowchart showing an example of an operation in the radiation measurement apparatus of Figure 12 embodiment.

Figure 18 is a remaining part of the flowchart showing the example of the operation in the radiation measurement apparatus of Figure 12 embodiment, following Figure 17.

Figure 19 is a view showing an example of a GUI in the radiation measurement apparatus of Figure 12 embodiment.

Figure 20 is a view showing coincidence counting rates in different coincidence judgment time periods with respect to a change of concentration.

Figure 21 is a view showing a relationship between concentration and intensity of a coincidence signal according to a tritium-derived signal, a coincidence signal according to a phosphorescence-derived signal and a coincidence signal according to the tritium-derived signal and the phosphorescence-derived signal, which being components in a calibration curve.

Figure 22 is a spectrum chart showing the coincidence signal according to the tritium-derived signal and the coincidence signal according to the phosphorescence-derived signal in a first experimentation system (using 476 solid scintillators and a photomultiplier of a large diameter glass tube).

Figure 23 is a spectrum chart showing the coincidence signal according to the tritium-derived signal and the coincidence signal according to the phosphorescence-derived signal in a second experimentation system (using 16 solid scintillators and a photomultiplier of a small diameter metal tube).

Figure 24 is a view showing examples of the photomultiplier and the scintillator column corresponding thereto that realize the radiation measurement apparatus of the second experimentation system, Figure 24(A) showing a four-sectioned photomultiplier and Figure 24(B) showing an example of an arrangement of the solid scintillators provided in the scintillator column.

Figure 25 is a view showing an example of the radiation measurement apparatus using the four-sectioned photomultiplier shown in Figure 24, Figure 25(A) showing an example of a photodetector that uses four (4) four-sectioned photomultiplier and Figure 25(B) showing an example of an arrangement of the solid scintillators provided in the scintillator column.

**Detailed description of preferred embodiments**

[Embodiment 1]

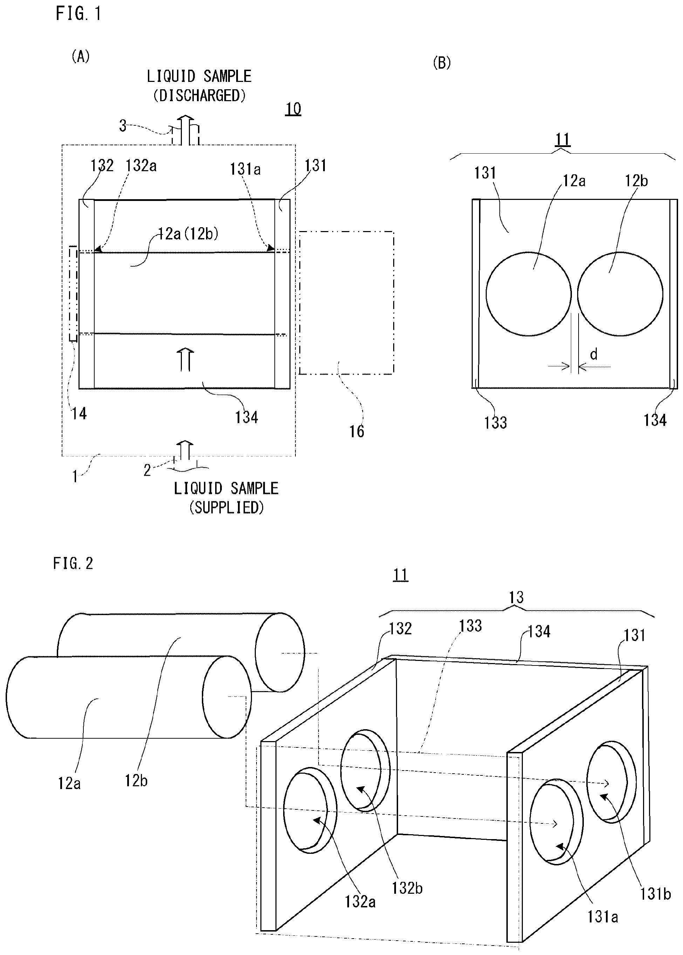

Figure 1 is an illustration view showing a principle of a radiation detection apparatus that is an embodiment of this disclosure. Figure 2 is a detailed perspective view of a scintillator column or scintillator unit 11 included in a radiation detection apparatus 10. Here, Figure 1(A) is a front view of (longitudinal) bar-like solid scintillators 12a and 12b seen from the front along an axial direction, and Figure 1(B) is a side view of the solid scintillator seen from one end surface (a surface contacted with a photodetector 16 in a right side in Figure 1(A).

Next, with reference to Figure 1 and Figure 2, a principle of the radiation detection apparatus 10 of this embodiment will be described. The radiation detection apparatus 10 includes the scintillator column 11 and the photodetector 16.

The scintillator column 11 includes a plurality of (two, in the embodiment) bar-like solid scintillators 12a and 12b, and a support member 13 for fixedly supporting the solid scintillators 12a and 12b to be in predetermined arrangement positions. That is, the scintillator column 11 is a member integrally constituted with the solid scintillators 12a and 12b and the support member 13.

The support member 13 is structured to support the solid scintillators 12a and 12b so that circumferential surfaces in the axial direction of the solid scintillators 12a and 12b are adjacent or opposite to each other with a small gap through which a liquid sample can pass and that the solid scintillators 12a and 12b become to have a predetermined arrangement position relationship.

Specifically, as shown in Figure 2, the support member 13 is formed in a frame shape (or a box shape excluding top surface and bottom surface, or a well lining shape) that a pair of plate-like portions 131 and 132 are coupled to each other by a pair of plate-like portions 133 and 134. However, in Figure 2, in order to illustrate an inside of the support member 13, the plate-like portion 133 in this side is indicated with a dotted line.

The plate-like portion 131 is formed with holes 131a and 131b (including throughholes, the same applies in the following) for positioning and supporting respective solid scintillators 12a and 12b in a desired arrangement state by inserting and fitting one end portions of the solid scintillators 12a and 12b into the holes 131a and 131b. The plate-like portion 132 is formed with holes 132a and 132b for supporting the solid scintillators 12a and 12b by inserting and fitting other end portions of the solid scintillators 12a and 12b into the holes 132a and 132b.

Here, each of the holes 131a, 131b, 132a and 132b is set to have a shape equal to or slightly larger than a shape of end surface of each of the solid scintillators 12a and 12b. Moreover, a length in a lateral direction of each of the plate-like portions 133 and 134 is set to have a length approximately the same length in the axial direction of each of the solid scintillators 12a and 12b.

Moreover, as for the bar-like solid scintillators 12a and 12b, since being contacted with the liquid sample directly, it is preferable to use a material not having the deliquescency, GAGG, (Gadolinium Aluminum Gallium Garnet), for example.

The solid scintillator 12a is inserted and fit into the hole 131a of the plate-like portion 131, from the side surface (left, in the drawing) of the frame-like support member 13 while penetrating the hole 132a of the plate-like portion 132.

Similarly, the solid scintillator 12b is inserted and fit into the hole 131b of the plate-like portion 131 from the side surface of the support member 13 while penetrating the hole 132b of the plate-like portion 132. As a result, the solid scintillators 12a and 12b are supported by the support member 13 to be the desired arrangement positions in a state where one end portions are fit into the holes 131a and 131b and the other end portions are fit into the holes 132a and 132b.

At this time, if there are small gaps between inner circumferential surfaces of the holes 131a, 131b, 132a and 132b and outer circumferential surfaces of the end portions of the solid scintillators 12a and 12b, as necessary, a filler may be filled or may be fixedly attached by an adhesive.

By constructing the scintillator column or scintillator unit 11 as described above, a gap d between the solid scintillators 12a and 12b adjacent with each other when seen from one end surface (left in the drawing) shown in Figure 1(B) is set to a small gap that allows the liquid sample to pass smoothly within the frame of the scintillator column 11 but attenuation in detecting low-energy tritium (beta rays) brought into contact with the circumferential surfaces of the axes of the solid scintillators 12a and 12b is not becomes a problem (is not so large), to 0.5 mm - 5.0 mm (1.0 mm, for example).

If the gap d is made as small as possible, the influence of attenuation due to the solution or liquid sample can be neglected. Moreover, if the gap d is made small, it is possible to enlarge diameters of the solid scintillators 12a and 12b or increase the number of the solid scintillators, as a result thereof, since a whole area of outer circumferential surface (i.e., surface) along axes of the plurality of solid scintillators can be increased, and thus, a contact area to the liquid sample also can be increased, it is possible to enhance a detection efficiency.

Furthermore, since the scintillator column 11 can be assembled only by inserting the solid scintillators 12a and 12b into the holes 132a and 131a of the plate-like portion 132 and the plate-like portion 131, respectively, assembly becomes easier and to be assembled quickly and efficiently. Moreover, since the scintillator column 11 is formed by constructing the solid scintillators 12a and 12b and the plate-like portion 13 integrally, it makes easy to attach to the test path 1 and replace when damaged.

The scintillator column 11 is fixedly held in a state of being immersed in the test path (path serving as a test position) 1 that is a cylindrical path through which the liquid sample passes. The test path 1 functions as a measurement chamber, and a top plate and a bottom plate are formed at its upper portion and a lower portion, and a supply port 2 into which the liquid sample is supplied is formed in the lower portion, and a discharge port 3 from which the liquid sample after tested is formed in the upper portion. The test path 1 is sealed structure except for the supply port 2 and the discharge port 3 so that the liquid sample is prevented from being leaked.

At a position contact to the scintillator column 11 outside the test path 1, the photodetector 16 is arranged to be closely brought into contact to one end surfaces of the respective solid scintillators 12 and 12b via a wall surface of the test path 1. As the photodetector 16, a photomultiplier, a semiconductor photoreceptor element, a photoelectron conversion element or the like may be used.

As the wall surface (at least a left wall surface, in the drawing) of the test path 1 opposite to and to be contacted to the photodetector 16, an acrylic board, a vitreous silica, etc. being transparent may be used, for example.

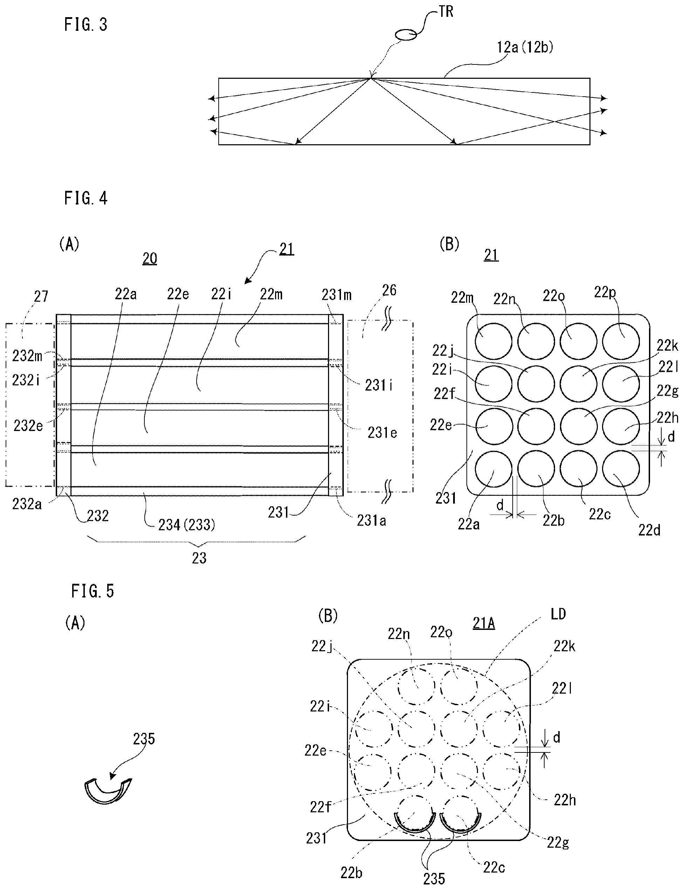

With reference to Figure 3, an action in detecting the radioactive substance (tritium) in the liquid sample by each of the solid scintillators 12a and 12b will be described.

As the liquid sample flows through the inside of the test path 1, when the beta rays of tritium contained in the liquid sample contact to the outer circumferential surface of each of the solid scintillators 12a and 12b, each of the solid scintillators 12a and 12b is excited, and when they return to a steady state, photons are emitted. The photons enter an inside of each of the bar-like solid scintillators 12a and 12b to be propagated at a high speed in the inside while being reflected by an inner wall surface or going straight on, and then, emitted from the end surface of each of the solid scintillators 12a and 12b. At this time, since the photons enter the inside of each of the solid scintillators 12a and 12b to be confined therein (i.e., since the photons are less likely to leak out from the surface of each of the solid scintillators 12a and 12b), the photons are propagated at a high speed to both end portions in the longitudinal direction, and therefore, attenuation is small and thus the radioactive substance in the liquid sample can be detected with high precision even low concentration.

As a modified example of Figure 1 embodiment, a reflection plate 14 may be provided at other end surfaces (left end surface in Figure 1(A)) of the solid scintillators 12a and 12b as necessary. The reflection plate 14 can further improve the detection efficiency of the radiation detection apparatus 10 by reflecting the light led to the other end surface side of the solid scintillators 12a and 12b to lead to the one end surface (right end surface, in the drawing).

However, the reflection plate 14 may be replaced with a photodetector similar to the photosensor 16 (equivalent to a photodetector 27 of Figure 4 embodiment).

Moreover, although a shape of the end surface of each of the solid scintillators 12a and 12b shows a circular shape in Figure 1 embodiment, the shape may be polygons such as a quadrangle, a hexagonal, an octagonal, etc. in order to increase the area of the axial circumferential surface. Moreover, each of the solid scintillators 12a and 12b may be formed in a cylindrical shape, that is, the shape of the end surface may be formed in a ring shape.

[Embodiment 2]

Figure 4 is an illustration view showing another embodiment of the radiation detection apparatus according to this disclosure.

A radiation detection apparatus 20 of this embodiment includes a scintillator column or scintillator unit 21. The scintillator column 21 that supports two or more bar-like solid scintillators in a longitudinal direction and a lateral direction, respectively (in Figure 4(B), four rows in the longitudinal direction and the lateral direction, respectively, in total 16 scintillators 22a - 22p) in a state of a matrix arrangement seen from a side of the end surface by arranging the scintillators in predetermined positions.

Specifically, the scintillator column 21 is constructed in a frame shape (or a well lining shape) that a pair of plate-like portions 231 and 232 are sandwiched by a pair of plate-like portions 233 and 234 (however, in Figure 4(A), the plate-like portion 233 in this side is not illustrated). The plate-like portions 231 and 232 are formed with holes 231a - 231p and 232a - 232p, respectively for inserting both end portions of the bar-like solid scintillators 22a - 22p. However, although illustration is omitted, it should be noted that the plate-like portion 232 is bilateral symmetry with respect to Figure 4(B).

The left and right pairs holes 232a - 232p and 231a - 231p (a part thereof appears in the drawing) are formed so that the solid scintillators 22a and 22b - 22p that are inserted into the holes have a predetermined gap d between the adjacent ones (however, in Figure 4(A), holes in the deep side (back side) and the reference numerals therefor are omitted). Then, the solid scintillators 22a - 22p are inserted and fit into the corresponding holes 232a - 232p and 231a - 231p one by one. At this time, since the plate-like portion 231 and the plate-like portion 232 are bilateral symmetry as described above, the both ends of the solid scintillator 22a are held by the holes 231a and 232d, for example, and the both ends of the solid scintillator 22b are held by the holes 231b and 232c, for example.

As a result, the plurality of solid scintillators 22a and 22b - 22p are fixedly supported by the pair of plate-like portions 231 and 232 included in the support member 23 to be in a desired arrangement state.

The scintillator column 21 thus constructed is immersed and arranged in the test path (although this is not illustrated in Figure 4, a portion that functions as a measurement chamber as similar to the test path 1 in Figure 1) so that one end surfaces of the solid scintillators 22a - 22p are brought into contact closely to the photodetector 26 via a wall surface of the test path 1 and the other end surfaces are brought into contact closely to the photodetector 27 via a wall surface in an opposite side of the test path 1. In this case, as the left and right wall surfaces of the test path 1, a plate-like member (e.g., transparent acrylic board) capable of transmitting the light from the solid scintillators 22a - 22p is used.

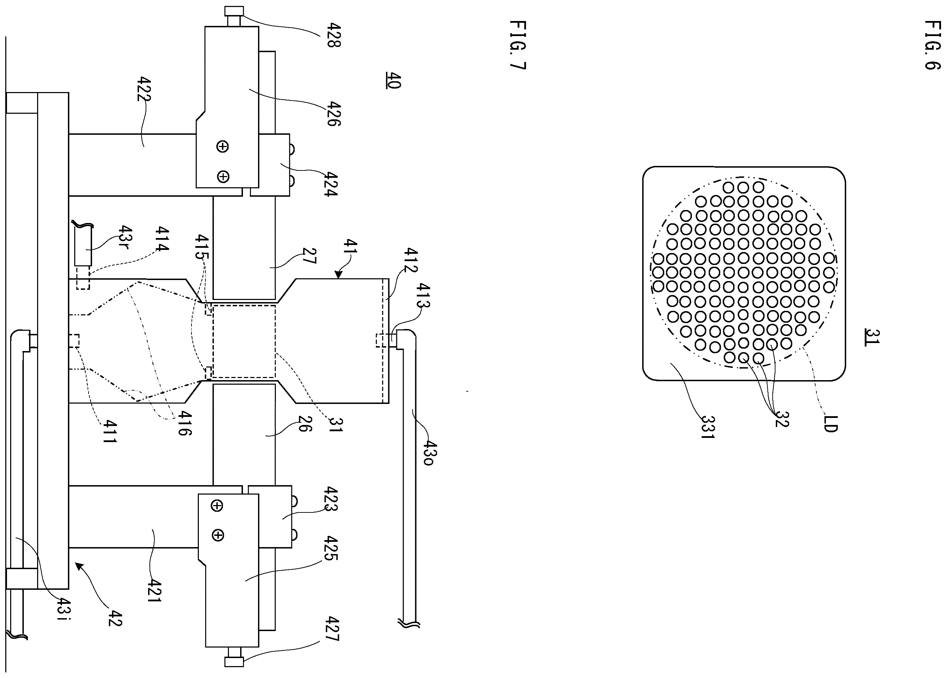

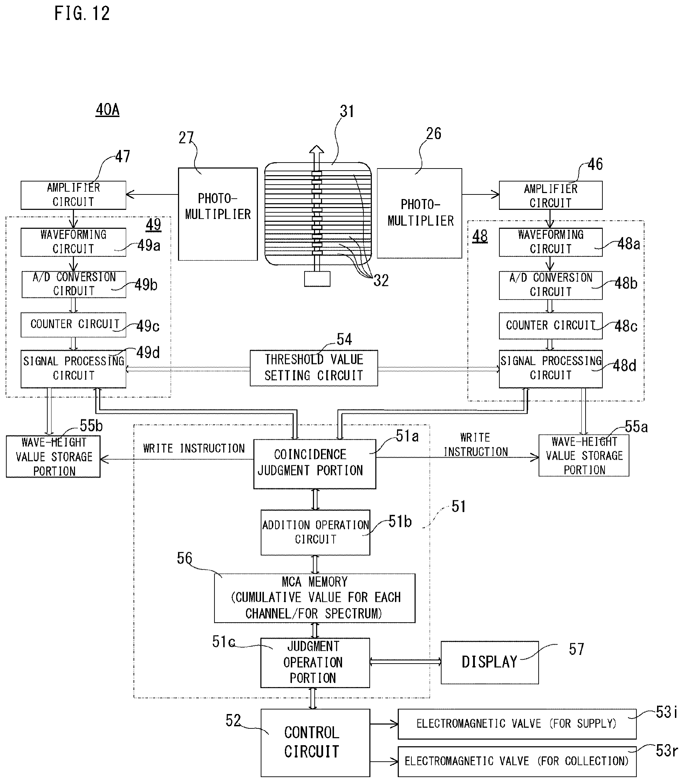

In this embodiment, the photodetector 26 and the photodetector 27 detect the light emitted from the one end surfaces and the other end surfaces of the plurality of solid scintillators 22a - 22p, and generate electrical signals in proportion to light amounts of the light. The electrical signals detected by the photodetector 26 and the photodetector 27 are supplied to a measurement apparatus (see Figure 7 or Figure 12, described later) to be used for concentration measurement as electrical signals in proportion to concentration of the beta ray such as tritium contained in the liquid sample.

In this embodiment, by making diameters of the solid scintillators 22a - 22p thinner than those of the solid scintillators 12a and 12b of Figure 1 and by increasing the number of the solid scintillators, it is possible to increase a whole outer circumferential area of the plurality of solid scintillators, and as a result, the detection precision of the radiation detection apparatus 20 can be improved.

[Embodiment 3]

Figure 5 is an illustration view showing another example of the support member in the radiation detection apparatus of Figure 4. Figure 5 shows a state where an inner side surface of the plate-like portion 231 is seen from an inside of the scintillator column or scintillator unit 21A.

In the scintillator column 21A of this embodiment, supporting structure of the support member 23a and an arrangement state of the solid scintillators are different as described in the following as compared with the scintillator column 21 of the radiation detection apparatus 20 of Figure 4.

The support member (equivalent to 23 of Figure 4) of the embodiment has, without forming the holes 231a - 231p and 232a - 232p in the pair of plate-like members 231 and 232, holding fixtures 235 shown in Figure 5(A) each of which is attached to each position corresponding to each of the holes on inner side surfaces of the plate-like member 231 and 232.

The holding fixture 235 is formed in a semicircle shape, and attached by the adhesive etc. on the plate-like portion 231 in correspondence to the holes 231b, 231c, 231e - 231h, 231i - 2311, 231n and 231o shown in Figure 4 so as to support the solid scintillators 22b, 22c, 22e - 22h, 22i - 221, 22n and 22o (in Figure 5(B), shown by a two-dotted line, and these are collectively referred to as "22") from the below.

Similarly, the holding fixtures 235 are attached on an inner side surface of the other plate-like portion 232 in positions corresponding to respective holes. In this case, in order to make attenuation of the light emitted by each solid scintillator small as much as possible, as for the plates 231 and 232, a material or materials with high transmittance (e.g., acrylic plates, quartz glass, etc.) is used.

In addition, in Figure 5(B), only the holding fixtures 235 that are provided at positions corresponding to the solid scintillators 22b and 22c in the lowest row are illustrated, and as for the positions corresponding to the other solid scintillators 22e - 22h, 22i - 221, 22n and 22o, illustration of the holding fixtures is omitted.

Moreover, in the embodiment, when using as the photodetectors 26 and 27, a device having its detectable range LD is a circular shape such as a photomultiplier, for example, the solid scintillators 22a, 22d, 22m and 22p that are to be arranged in positions out of a detectable range LD, that is, positions of four corners in the plate-like portion 231 (also in 232) in the example of Figure 4(B) are omitted.

In other word, the detectable range LD is smaller than a longitudinal and lateral shape of a main surface of the plate-like portion 231 (232), and numerous solid scintillators 22 are to be arranged within the range LD with suitable gaps.

According to this embodiment, since the solid scintillators need only be placed within the detectable range LD of photodetectors 26 and 27, beta rays such as tritium can be efficiently detected. Moreover, even if using a support member (23) having structure different from those in Figure 1 and Figure 4, the same or similar detection of the beta ray is realizable. Furthermore, since the plurality of solid scintillators need only to be placed on the holding fixtures 235 from the above, it is possible to easily assemble the scintillator column 21A.

[Embodiment 4]

Figure 6 is an illustration view showing a further embodiment (preferable embodiment) of the radiation detection apparatus according to the present invention. Figure 6 shows a plate-like portion 331 seen from a right side surface (i.e., surface corresponding to Figure 4(B) and Figure 5(B)) of the support member (corresponding to the support member 23 of Figure 4) included in a scintillator column or scintillator unit 31, and is omitting a front view (view corresponding to Figure 4(A)).

The radiation detection apparatuses (although illustration is omitted, a reference numeral "30" is used for comprehensively indicating the photodetectors and the scintillator column 31) of this embodiment is different from the radiation detection apparatus 20 or 20A in Figure 4 or Figure 5 in a following point(s).

That is, in the scintillator column 31, as the solid scintillator 32 (the same reference numeral is used in Figure 6 without distinguishing dependent on the arranged positions), a solid scintillator having a small diameter is used, and the number of the solid scintillators is greatly increased, and such numerous solid scintillators are supported by a support member (different from the support member 23 in Figure 4 in the number of holes, the shape of the hole and the arrangement state) to be a desired arrangement state. Accordingly, it is devised to increase a sensable contact area of the circumferential surfaces (or surfaces) of the whole of the numerous solid scintillators 32.

The plate-like portion 331 (also 332) included in the scintillator column 31 is formed with a number of holes (although illustration is omitted, holes corresponding to the holes 131a and 131b in Figure 1 and holes, as for the plate-like portion 232, corresponding to the holes 132a and 132b, and all the holes being made to have small diameters so as to correspond to the thickness of the solid scintillators), and one end portion and the other end portion of each of the solid scintillators 32 are inserted and fit into each of the holes. Thus, the pair of plate-like portions 331 and 332 included in the support member 33 fixedly support the numerous solid scintillators 32 to be in the desired arrangement state.

As described above, by supporting the numerous solid scintillators 32 by the support member included in the scintillator column 31 to be in the desired arrangement state, even seeing from the front surface similar to Figure 4(A), and seeing from the upper surface (or the lower surface that the liquid sample is supplied), the numerous solid scintillators 32 are arranged in a comb-like configuration.

Moreover, the arrangement positions of the numerous solid scintillators 32 each of which is supported to be inserted and fit into each of the holes formed on the plate-like portion 331 and the plate-like portion 332 are set to be a range smaller than a planar shape of the main surfaces of the plate-like portions 331 and 332 so that the range becomes within the detectable range LD (circle of two-dotted line in the drawing) in case where the photomultiplier is used as the photodetectors 26 and 27 as similar to Figure 5 embodiment. Although an example that the detectable range LD is a circular shape is shown, it should not be limited to this, the shape may be polygons such as a hexagonal, an octagonal, etc.

On the other hand, in Figure 4 embodiment, the detectable range LD is a quadrangle.

In addition, although the plurality of solid scintillators are arranged longitudinally and laterally to be a matrix shape or a comb shape and arranged in the arrangement state excluding the solid scintillator(s) out of the detectable range LD, instead of such the arrangement, odd and even numbered stages may be arranged, by alternately shifting 1/2 to the left or right the positions of the solid scintillators 32. Even such the other arrangement example, dependent on the seeing direction, it appears the comb shape, and therefore, such an arrangement is also "arranged in the comb shape" in a broad sense.

As other arrangement examples, a concentric circle arrangement, a honeycomb arrangement, etc. may be adopted.

In addition, the scintillator column 31 of Figure 6 is constructed in a manner that the numerous solid scintillators 32 are arranged within the detectable range LD with the predetermined gaps so that adjacent ones are not contacted with each other, and supported in the desired arrangement state by the pair of plate-like portions 231 and 232 included in the support member (33; although illustration is omitted, corresponding to the support member 23 in Figure 4).

However, in the scintillator column 31 used by the inventors et al. in the prototype and experiment, the number of solid scintillators 32 is increased significantly to increase the whole surface area of the solid scintillators, but as it is not possible to show all of the solid scintillators, they are omitted.

The inventors et al. experimented by attaching the scintillator column 31 to a radiation measurement apparatus 40 that will be described in Figure 7.

[Embodiment 5]

Figure 7 is an appearance view (front view) of a radiation measurement apparatus that measures tritium using the radiation detection apparatus according to the present invention.

A radiation measurement apparatus 40 includes a cylinder-like test path 41 and a mount 42 for mounting thereon the test path 41 and the photomultipliers 26 and 27 each of which is an example of the photodetector in order to measure tritium in the liquid sample by attaching the above-described scintillator column or scintillator unit 11, 21 or 31 (in the following description, a case of using the scintillator column 31 shown in Figure 6 will be described).

The test path 41 functions as a measurement chamber, and as an example, the test path 41 has a longitudinal cylinder shape, and fixedly mounted on the mount 42 so that an opening portion formed in its bottom surface is in close contact to the mount 42 and sealed to prevent leakage. The test path 41 is formed by a transparent member (e.g., a transparent acrylic board, a vitreous silica, etc.) so that at least wall surfaces (wall surfaces of the right and left, in the drawing) that are brought into contact to end surfaces of the solid scintillators 32 of the scintillator column 31 easily transmit the light.

The mount 42 is formed with a supply port 411 for supplying the liquid sample from the bottom of the test path 41 and attached, in positions sandwiching the test path 41, with a post 421 and a post 422 for fixedly supporting the photomultipliers 26 and 27, respectively. Semicircular concave portions (not shown) on which the photomultipliers 26 and 27 are respectively placed are formed in upper portions of the post 421 and the post 422.

The test path 41 has a planar shape that is approximately the same as or slightly larger than a plane of the scintillator column 31, whereby the scintillator column 31 can be inserted from the above to be attached. It is sufficient for the test path 41 to make at least only portions opposite to the scintillator column 31 and the photomultipliers 26 and 27 be approximately the same planar shape as the scintillator column 31. An inside of the test path 41 serves as a measurement chamber for measuring the beta ray contained in the liquid sample when the liquid sample is poured.

In addition, there occurs a case where when the liquid sample from the supply port 411 (a path having a circular shape in cross-section, such as a pipe) hits directly the scintillator column 31 having a rectangular shape in cross-section, a force (hydraulic-pressure) concentrates on a part of the scintillator column 31 and thus the solid scintillator 32 is destroyed. In order to prevent such a problem, the measurement chamber (test path 41) may have a buffer portion 416 that an internal shape below the scintillator column 31 is once wider (swelled) in a middle portion of a height direction and narrows just before the scintillator column 31 as shown by the two-dotted lines.

In at least two opposite internal walls of the test path 41 (e.g., internal walls of the surfaces where the photomultipliers 26 and 27 are arranged), a plurality of guide grooves (not shown) for attaching and positioning the scintillator column 31 are formed in a longitudinal direction from an upper opening portion to the positions of the photomultipliers 26 and 27. The scintillator column 31 is formed with, in positions corresponding to the guide grooves, a plurality of convex portions (not shown) that are engaged with the guide grooves. The scintillator column 31 is attached inside the test path 41 at positions that the photomultipliers 26 and 27 arranged by engaging each convex portion with corresponding each guide groove and inserting the scintillator column 31 into the test path 41 from the above. This causes the scintillator column 31 to be attached in a direction transverse to a flow direction (or moving direction) of the liquid sample.

In addition, it is possible to adopt structure that by forming a plurality of projections 415 on two opposite wall surfaces of the test path 41 in positions at the same height in correspondence to the position to which the scintillator column 31 is attached, and the scintillator column 31 is inserted from the above thereof to be placed and supported on the plurality of projections 415.

In a state where the scintillator column 31 is positioned and accommodated in the inside of the test path 41, the photomultiplier 26 and the photomultiplier 27 are arranged so as to sandwich the scintillator column 31 and the solid scintillators 32 from the outside of the test path 51, and in a state where the photomultiplier 26 and the photomultiplier 27 are placed on the concave portions of the post 421 and the post 422, respectively, the photomultipliers 26 and 27 are attached onto the posts 421 and 422 to be held by holding portions 423 and 424. Thus, the photomultiplier 26 and the photomultiplier 27 are attached to the mount 52 in a state where the photomultiplier 26 and the photomultiplier 27 are in close contact to the both end surfaces of the scintillator column 31 (i.e., solid scintillators 32) via the wall surfaces of the right and left of the test path 51.

At this time, in order to make the both ends of respective solid scintillators of the scintillator column 31 be in close contact to the photomultipliers 26 and 27, with optical grease applied to each end of the solid scintillator to a thickness of, about 10 $\mu$m, for example, the photomultipliers 26 and 27 are pressed against both ends of the solid scintillators, respectively.

It is pointed out in advance that the same applies to a radiation measurement apparatus 40A shown in Figure 12 described later.

Moreover, the post 421 is attached with a holding portion 425 that presses the photomultiplier 26 against the test path 41 from a traverse (outside). The post 422 is attached with a holding portion 426 that presses the photomultiplier 27 against the test path 41 from a traverse (outside). The holding portions 425 and 426 are attached with adjustor portions 427 and 428 for adjusting pressing forces that press the photomultipliers 26 and 27 against the test path 41.

An upper opening portion of the test path 41 is sealed in a state of being covered by a lid member 412. A discharge port 413 for discharging the liquid sample is formed in the lid member 412. A drainage pipe 43o is connected to the discharge port 413. A supply pipe 43i is connected to the above-described supply port 411.

Moreover, there is formed, below the test path 41, with a collection port 414 for collecting the liquid sample in the test path 411 when detecting tritium that exceeds a releasable standard value (releasable tolerance). A collection pipe 43r is connected to the collection port 414.

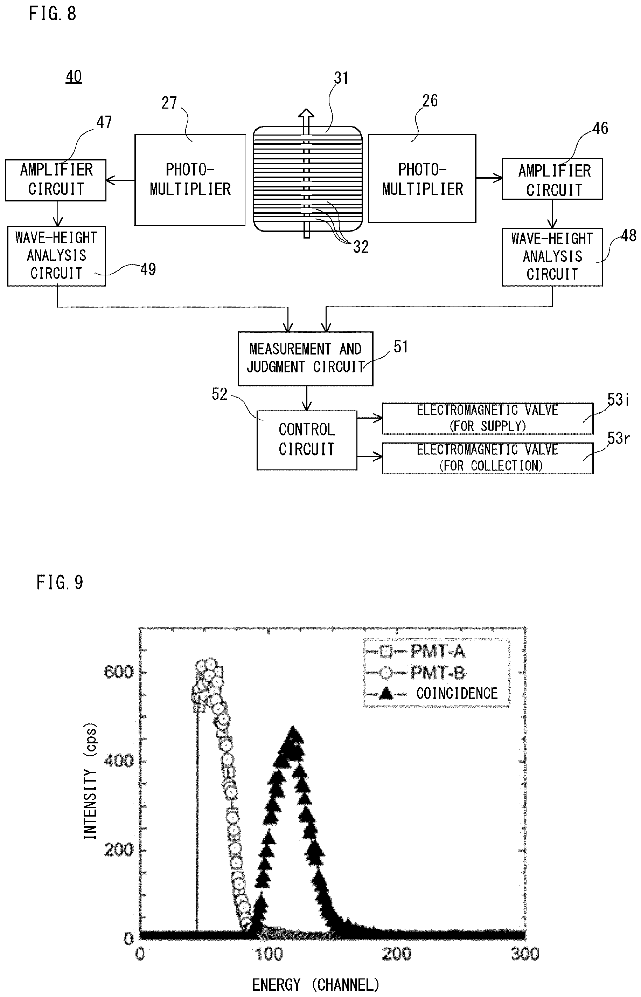

The electromagnetic valves (53i and 53r in Figure 8) are connected to the supply pipe 43i and the collection pipe 43r, respectively.

Figure 8 is a block diagram showing the structure of the radiation measurement apparatus 40 of Figure 7 embodiment.

The radiation measurement apparatus 40 includes the scintillator column 31, the photomultipliers 26 and 27 that are respectively contacted closely with both end surface portions of the plurality of solid scintillators 32 from the both sides of the scintillator column 31 and detects the light, amplifier circuits 46 and 47, wave-height analysis circuits 48 and 49, a measurement and judgment circuit 51 and a control circuit 52.

In addition, the wave-height analysis circuits 48 and 49, the measurement and judgment circuit 51 and the control circuit 52 may be constructed by a computer and software (program for realizing functions of respective circuits 48 - 52).

Next, an outline of a case of detecting and measuring tritium in the liquid sample by using the radiation measurement apparatus 40 will be described with reference to Figure 6 - Figure 8.

Prior to measurement, the electromagnetic valve 53i for supply and the electromagnetic valve 43r for collection are in a closed state, respectively.

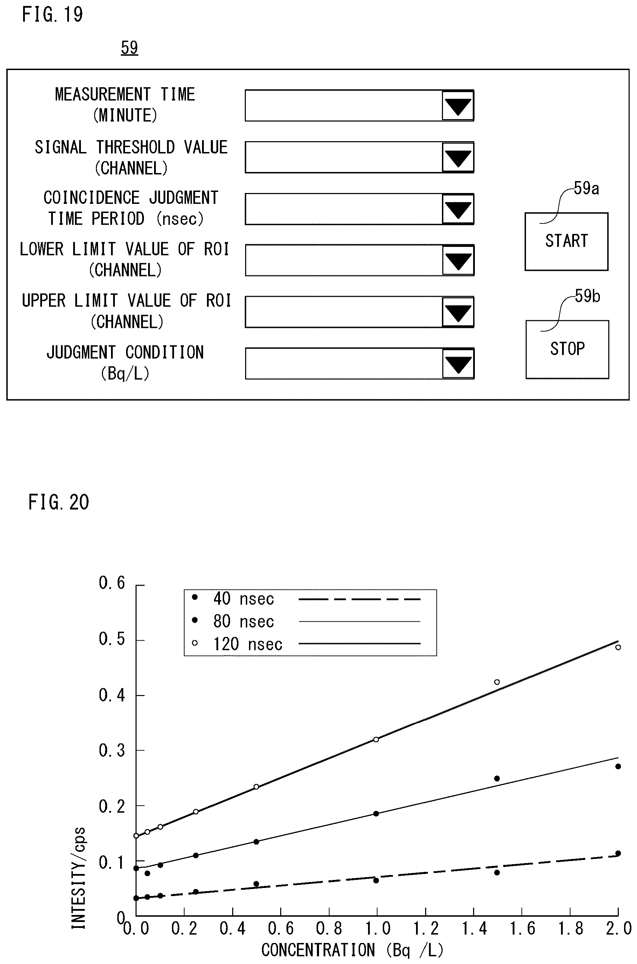

When an operator depresses a start button 59a (Figure 19) provided on a GUI 59 described later, for example, the control circuit 52 makes the electromagnetic valve 53i open. Accordingly, the liquid sample is supplied to the inside of the measurement chamber of the test path 41 shown in Figure 6 from the supply pipe 42i, and a water level rises and fills the measurement chamber. A reason why the liquid sample is thus supplied upward from a lower portion (bottom) of the test path 41 is to prevent, as compared to supplying of the test sample in an opposite direction (i.e., dropped from above), air bubbles from being generated on the circumferential surfaces of the numerous solid scintillators 32, thereby to prevent a decrease in sensitivity.

If the radioactive substance contained in the liquid sample is brought into contact to the outer circumferential surfaces of the numerous solid scintillators 32 accommodated in the scintillator column 31 at the time that the liquid sample passes through the surroundings or outer circumferential surfaces of the solid scintillators 32, the solid scintillators 32 will generate weak light according to the concentration of the radioactive substance. This light is confined in the inside of each solid scintillator 32 and led to both end surfaces while being reflected by the inner circumferential surface of the solid scintillator 32 to be refracted or going in the inside straight in the axial direction, and converted into the electrical signals and multiplied by the photomultipliers 26 and 27 to be output. The electrical signals that are output from the photomultipliers 26 and 27 are amplified by the corresponding amplifier circuits 46 and 47, and then, output to the wave-height analysis circuits 48 and 49.

Since the wave-height values of the electrical signals from the amplifier circuits 46 and 47 have a proportional relation to the energy, the wave-height analysis circuits 48 and 49 obtain spectrums of the radiation ray based on a wave-height distribution chart of the electrical signals being input.

The measurement and judgment circuit 51 obtains, using the spectrums of the radiation ray obtained by the wave-height analysis circuits 48 and 49, a nuclide from the wave-height values of the spectrums, and obtains the radiation concentration of the nuclide according to its intensity.

Specific operation and processing of the wave-height analysis circuits 48 and 49 and the measurement and judgment circuit 51 are as follows.

With reference to Figure 9, signals (PMT-A indicated by white squares and PMT-B indicated by white circles) that are detected as coincidence in the photomultipliers 26 and 27 and a coincidence signal (Coincidence) are indicated as the spectrum by black triangles (a horizontal axis indicates the wave-height value, i.e., energy, and a vertical axis indicates the number of events, i.e., intensity). The beta ray energy from tritium is very low, averaging 5.7 keV, and would normally be hidden by thermal noise, etc.

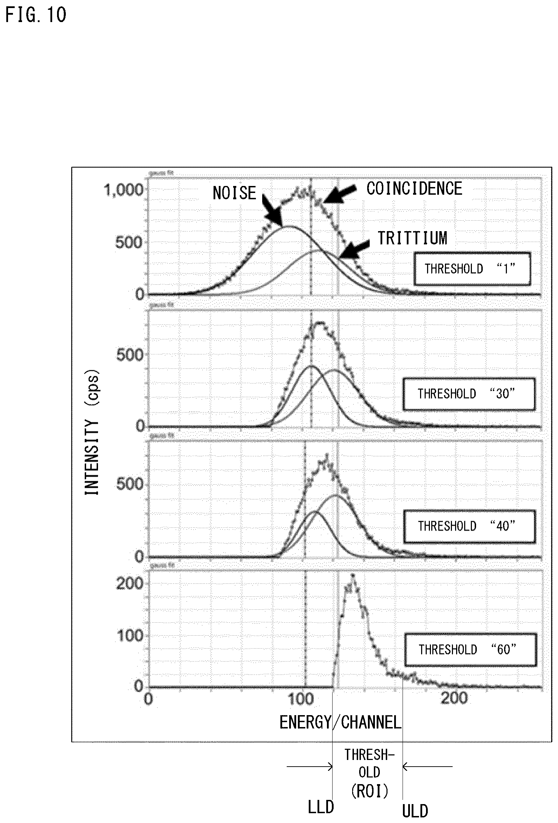

Then, the detector is cooled to 0°C to eliminate thermal noise as much as possible, and the coincidence spectrum is separated into a noise-derived signal and a tritium-derived signal by waveform separation (Gauss fitting). In this embodiment, only the tritium-derived signal is extracted by setting carefully an ROI (Region of Interest) as shown in Figure 10. The ROI is set within a range between a lower limit value LLD and an upper limit value ULD that are respectively indicated with the number of channels, and it should be noted that a term "threshold value" used in relation to Figure 10 means the number of the channels of the lower limit value LLD.

Processing that extracts only this tritium-derived signal is shown in Figure 10. When a threshold value (LLD) is "1", a left signal is a noise component and a right signal is the tritium-derived signal out of two signals separated from each other. It can be seen that when the threshold value (LLD) is increased to "30" and then "40", the counting rates of the noise component and the tritium-derived signal are reversed. In the experiment, when the threshold value (LLD) is set to "60", as shown in the graph in the lowest row of Figure 10, it becomes possible to separate and extract only the tritium-derived signal while hardly including the noise component.

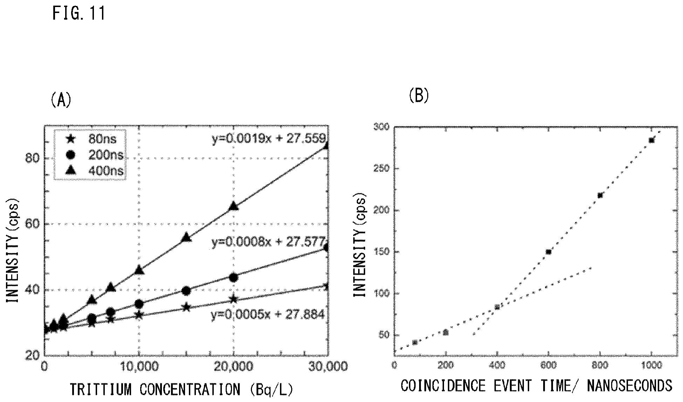

The dependency between a tritium concentration and a coincidence judgment time period is shown in Figure 11. As shown in Figure 11(A), when the coincidence judgment time periods are 80 nanoseconds (star marks), 200 nanoseconds (circle marks) and 400 nanoseconds (triangle marks), all of which show very good linearity. The longer the coincidence judgment time period, the higher the counting rate, which results in a tendency for the counting rate to increase. Here, the coincidence judgment means judgment on whether two electrical signals occur simultaneously.

However, if the coincidence judgment time period exceeds a certain value as shown in Figure 11(B), the counting rate deviates from a proportional relationship. This means that up to 400 nanoseconds, the judgment is made for coincidence of signal and signal, but beyond 400 nanoseconds, it is thought that the judgment is made for coincidence of "signal and noise" or "noise and noise", and therefore, the coincidence judgment time period is set within a range between 40 nanoseconds and 400 nanoseconds.

If the measurement and judgment circuit 51 does not measure the tritium concentration exceeding the standard value when the liquid sample passes through the circumferential surfaces of the scintillator column 31, the control circuit 52 leaves the electromagnetic valve 53i open to continuously supply a liquid sample to the test path 41 (measurement chamber). The liquid sample overflowing from the measurement chamber is discharged (or released) to the outside through the discharge port 413 and the drainage pipe 43o.

On the other hand, when measurement and judgment circuit 51 measures the tritium concentration exceeding the standard value, the control circuit 52 closes the electromagnetic valve 53i and opens the electromagnetic valve 53r to collect the liquid sample in the measurement chamber through the collection port 417 and the collection pipe 43r.

If the liquid sample in the measurement chamber is all collected and the inside of the measurement chamber becomes empty, the control circuit 52 closes the electromagnetic valve 53r, and then, opens the electromagnetic valve 53i to prepare a subsequent test and measurement of a liquid sample.

As described above, the radiation measurement apparatus 40 is capable of continuously measuring the liquid sample containing a very small amounts tritium. The radiation measurement apparatus 40 of this embodiment can efficiently measure the liquid sample containing a very small amounts tritium.

Details of the radiation measurement apparatus 40 used in the experiment by the inventors et al. are as follows.

The scintillator column 31 is constituted using 476 solid scintillators 32 each having 1.0 mm diameter and 35.0 mm length.

However, the experiment conducted by the inventors et al. have indicated that the length of the solid scintillator 32 is preferably in a range between 10.0 mm and 35.0 mm. If the length of the solid scintillator 32 is too long, the attenuation amount of the light propagating in the inside thereof becomes larger, and the light that is output from both end surfaces becomes faint. On the other hand, if the length of the solid scintillator 32 is shortened, the problem of the attenuation of the light in its inside is solved, but which arises another problem that the surface area in contact with the liquid sample becomes smaller, so the efficiency is not good.

The gap d between the adjacent solid scintillator 32 is set to 1.0 mm. In addition, the gap d can be machined to 0.5 mm by using a machine tool with high drilling accuracy, and even if d=0.5 mm is selected, the liquid sample can flow smoothly among the numerous solid scintillators 32.

As the solid scintillator 32, a GAGG scintillator manufactured by C&A corporation is used. Moreover, in the scintillator column 31, as described above, a number (e.g., 476) of thin solid scintillators are used to be arranged in a comb shape, thereby to intend to increase the whole surface area.

As the photomultipliers 26 and 27, "R878" manufactured by Hamamatsu Photonics K.K. is used. As the amplifier circuits 46 and 47, "APG1500" manufactured by TechnoAP Co., Ltd. is used. As the wave-height analysis circuit (Digital Signal Processor), "APV8016A" manufactured by TechnoAP Co., Ltd. is used.

Next, the experimental results obtained by the radiation measurement apparatus 40 using the radiation detection apparatus according to this embodiment will be verified.

As a premise, if only one luminescence signal is detected in the coincidence detection method, it is considered as a noise to be distinguished from a signal dependent on the beta ray. By adopting the structure increasing the surface area of the solid scintillators, the counting rate of the tritium-derived signal is improved, and a result, it becomes possible to lower a detectable lower limit value.

Moreover, a measurable flow rate of the liquid sample is designed to be 20 L/min per system of the radiation detection apparatus. In addition, since the liquid sample is directly contacted to the solid scintillator and a range of the beta ray is short, there is a possibility that an adhesion of an impurity etc. will have a bad influence on measurement; however, the liquid sample envisioned in this disclosure, as an example, is water with a low concentration of radioactive substance contained and is close to pure water because the liquid sample is filtered through a multi-stage filtering process called ALPS.

Therefore, in the experiment by the inventors et al., in order to detect and measure such a low-concentration radioactive substance with high precision, the radiation detection apparatus 30 and the radiation measurement apparatus 40 using the radiation detection apparatus 30 in the embodiment of this disclosure are designed according to the required specifications in Table 1.

[Table 1]

| | |
|---|---|
| Processing Flow Rate | $150^3$/Day |
| Detection Lower Limit Value 1 | 15,000 Bq/L (Screening of 60,000 Bq/L) |
| Detection Lower Limit Value 2 | 10,000 Bq/L |

In the radiation measurement apparatus 40 shown in Figure 7 (or radiation measurement apparatus 40A shown in Figure 12 described later), the processing flow rate for a single system is 20L/min, i.e., 28.8 m$^3$/day. In order to satisfy 150 m$^3$/day, it is necessary to make it work by six systems in parallel. In this case, the flow rate becomes 172.8 m$^3$/day, the condition required in the table 1 can be satisfied.

In order not to reduce an operation rate, two additional systems that are individually stopped for maintenance, etc.(including scintillator column cleaning) should be added, and a set of radiation measurement apparatus may be configured by the eight systems.

Eight measurement chambers (test path 41) are provided independently, and are connected in parallel with each other. By automatically changing the functions of the measurement chambers by the electromagnetic values, it is possible to perform continuous measurement without stopping measurement. It is possible to supply or discharge the liquid sample to or from each measurement system independently.

The detectable lower limit value is obtained from the data of the coincidence judgment time period 400 nanoseconds shown in Figure 11. Table 2 is a table that summarizes necessary data obtained from the experiments to obtain the detectable lower limit value.

[Table 2]

| | |
|---|---|
| Tritium Concentration H [Bq/L] | 30,000 Bq/L |
| Signal Intensity Ns [cps] | 83.7 cps |
| Background Nb [cps] | 28.3 cps |
| Measurement Time t [sec] | 10 sec |
| Moving Average Times a [time] | 10 times |

From the data in Table 2, it is possible to obtain an equipment conversion factor K and the detectable lower limit value LOD by following equations (1) and (2).

Describing in detail, Figure 11 shows a relationship between the tritium concentration and the radiation intensity obtained from the detector. Although the intensity varies dependently on the coincidence judgment time period, in the same coincidence judgment time period, the concentration and the intensity have a linear relationship. Moreover, Table 2 indicates numeral values required to obtain the detectable lower limit value in case of the coincidence judgment time period is 400 nanoseconds among the data of Figure 11. These numeral values are experimental values and cannot be read from the graphs, and therefore, the equipment conversion factor K and the detectable lower limit value LOD can be obtained by substituting these values for the equations (1) and (2), respectively.

[Equation 1]

$$K = \frac{H}{Ns-Nb} = 541.5 \; [Bq/cps] \quad --- (1)$$

[Equation 2]

$$LOD = K * 3 * \sqrt{(Nb - \frac{Nb}{a*t})} = 455.2 \; [Bq/L] \qquad --- (2)$$

In screening 60,000 Bq/L, a measurement time for guaranteeing the detectable lower limit value 15,000 Bq/L becomes 2. 2 seconds if using the equation (2), and in continuously sampling 1,500 Bq/L, the measurement time for guaranteeing the detectable lower limit value 1,000 Bq/L becomes 488 seconds.

According to the experiment by the inventors et al., it is confirmed that the embodiment of this disclosure satisfies the requirement specifications.

Using the radiation measurement apparatus of this disclosure, in view of the requirement specification of Table 1, the design specifications for measuring tritium concentration with radiation measurement apparatus 40 of the embodiment are as shown in Table 3.

[Table 3]

| | |
|---|---|
| Processing Flow Rate | 172.8 m$^3$/Day |
| Measurement Time Guaranteeing Detectable Lower Limit value 1 | 2.2 sec |
| Measurement Time Guaranteeing Detectable Lower Limit value 2 | 488 sec |

The flow rate is sufficient. In screening the detection time, it is possible to perform the measurement with almost test sample flowing. When measuring the tritium concentration of liquid samples with different tritium concentrations, for example, if the tritium concentration is measured at 5-second interval, for example, and an alert is issued when recognizing the value exceeding the standard value being set, the difference in concentration can also be recognized at 5-second interval.

According to the embodiment of this disclosure, real-time measurement of tritium, which was impossible in the past, becomes possible.

Figure 12 is a block diagram showing another embodiment of the radiation measurement apparatus, and especially, the wave-height analysis circuits 48 and 49 and measurement and judgment circuit 51 are shown in more detail as compared with Figure 7 embodiment.

In the radiation measurement apparatus 40A of this embodiment, the wave-height analysis circuits 48 and 49 and measurement and judgment circuit 51 are constituted as follows. The wave-height analysis circuit 48 includes a waveforming circuit 48a, an A/D conversion circuit 48b, a counter circuit 48c and a signal processing circuit 48d. The wave-height analysis circuit 49 includes a waveforming circuit 49a, an A/D conversion circuit 49b, a counter circuit 49c and a signal processing circuit 49d.

The measurement and judgment circuit 51 includes a coincidence judgment portion 51a, an addition operation portion 51b and a judgment operation portion 51c.

The waveforming circuit 48a of the wave-height analysis circuit 48 and the waveforming circuit 49a of the wave-height analysis circuit 49 waveform the electrical signals according to the brightness of the light detected by the photomultipliers 26 and 27 and after amplified by the amplifier circuits 46 and 47. In the following, as to respective circuits of the wave-height analysis circuit 49 corresponding to respective circuits of the wave-height analysis circuit 48 are indicated with similar reference numerals in parentheses to avoid duplicate descriptions.

The A/D conversion circuit 48b (49b) converts the electrical (analog) signal into a digital value. The counter circuit 48c (49c) counts the digital value of a peak value of the light signal. The signal processing circuit 48d (49d) intends to reduce a processing burden by excluding, based on the threshold value that is set by the threshold setting portion 54, low-level signals (digital values) that are not significant signals out of the light signals detected by the photomultiplier 26 (27) to eliminate unnecessary processing in the various portions included in the measurement and judgment circuit 51 at the latter stage.

The threshold value set by the threshold value setting portion 54 is a threshold value (signal threshold value) for extracting only a significant signal in different from the ROI shown in Figure 10.

Judgment results, etc. by the judgment operation portion 51c included in the measurement and judgment circuit 51 are displayed on a display 57. A GUI (see Figure 19) described later is also displayed on the display 57 to make an operator set measurement conditions (parameters) prior to performing the measurement.

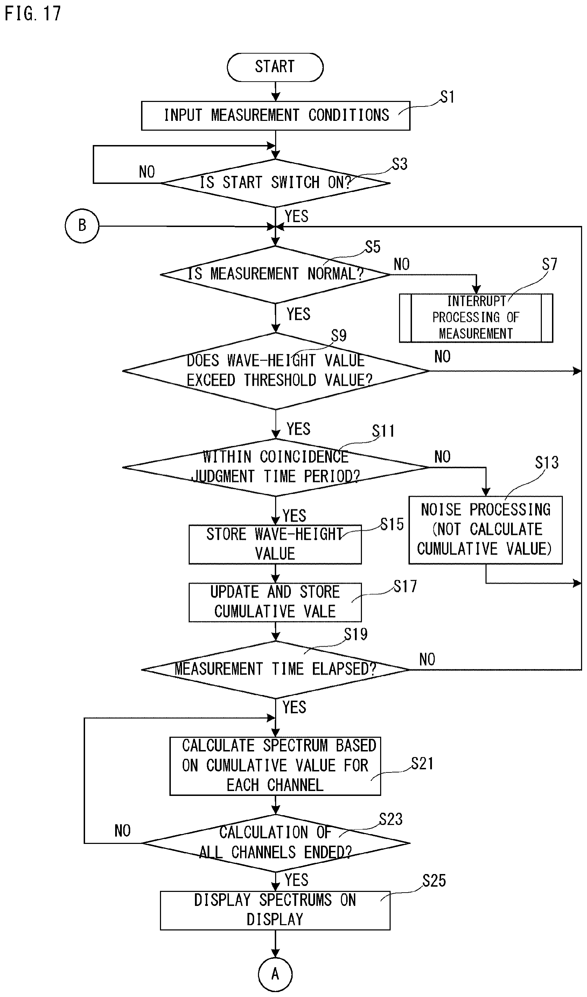

Detailed operations of the respective portions in Figure 12 will be described with reference to flowcharts shown in Figure 17 - Figure 18 described later. As similar to Figure 7 embodiment previously described, the overall operation of the measurement and judgment circuit 51 may be controlled by a computer or processor (not shown) included in this measurement and judgment circuit 51.

The coincidence judgment portion 51a included in the measurement and judgment portion 51 judges whether the first electrical signal that is output from the photomultiplier 26 equivalent to the first photodetector and the second electrical signal that is output from the photomultiplier 27 equivalent to the second photodetector occur simultaneously. Specifically, it is judged whether the wave-height values of the first electrical signal and the second electrical signal come within the coincidence judgment time period. Then, when it is judged that the first electrical signal and the second electrical signal occur simultaneously, the first electrical signal and the second electrical signal are handled as the significant signal. However, when it is not judged that the first electrical signal and the second electrical signal occur simultaneously, the first electrical signal and second electrical signals are assumed to have never existed.

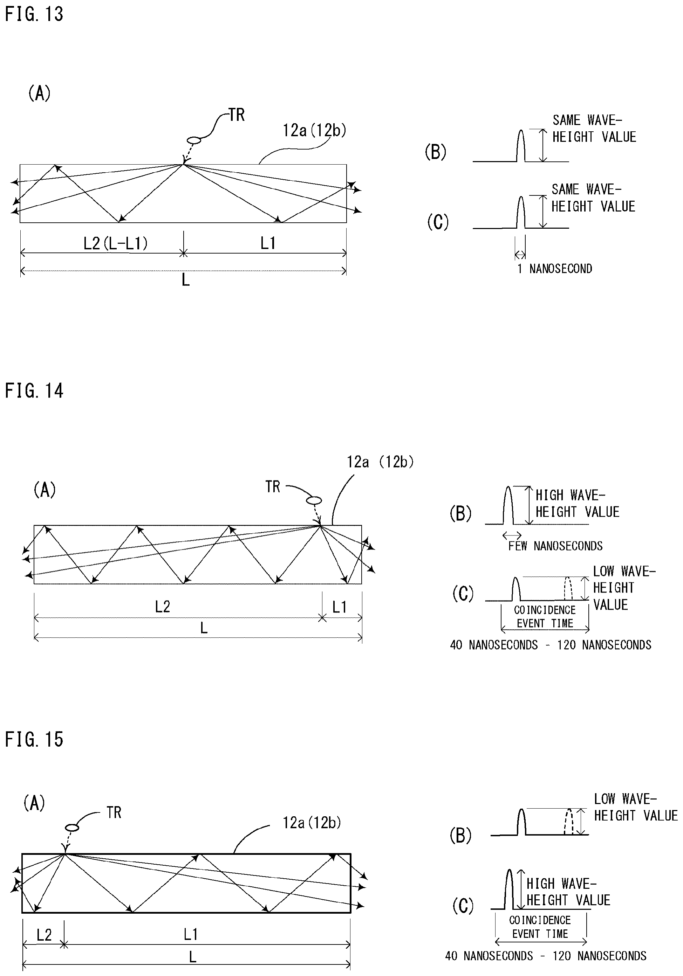

Figure 13 - Figure 15 are illustration views showing how the detection signals of photomultipliers 26 and 27 (and consequently the output signals of the amplifier circuits 46 and 47) change depending on where in the longitudinal direction the solid scintillators 12a or 12b (or 22a - 22p) etc. detect light due to the contact by tritium TR. With reference to Figure 13 - Figure 15, the coincidence judgment will be described.

In Figure 13 - Figure 15, among two wave form charts shown in a right side, an upper wave form chart is the signal detected by the photomultiplier 26, and the digital value of the wave-height value analyzed by the wave-height analysis circuit 48 is stored in the wave-height value storage portion 55a. A lower wave form chart is the signal detected by the photomultiplier 27, and the digital value of the wave-height value analyzed by the wave-height analysis circuit 49 is stored in the wave-height value storage portion 55b.

Especially, Figure 13 shows a case where the photomultipliers 26 and 27 detect the light almost simultaneously because a position of the light emission is approximately the center (L1≒L2). In this case, the wave-height values of two signals from the photomultipliers 26 and 27 are equal to each other, and there is approximately no time difference (1 nanosecond).

Figure 14 shows a case where the photomultiplier 26 detects light earlier than the photomultiplier 27 because the position of the light emission is close to the photomultiplier 26 and far from the photomultiplier 27 (L1<<L2). In this case, the wave-height value of the signal of the photomultiplier 26 is high, and the wave-height value of the signal of the photomultiplier 27 becomes low according to the attenuation as the light propagating. In actual, the propagation speed of the light is so fast that the detection time difference of the photomultiplier 26 and the photomultiplier 27 is small (few or several nanoseconds). Therefore, even if the signal processing in the electrical system (processing of the amplifier circuits and the wave-height analysis circuits) is delayed (delayed up to a timing of the signal indicated by a dotted line), the coincidence judgment portion 51a judges as the coincidence if the delay is within the coincidence judgment time period (e.g., 40 nanoseconds - 120 nanoseconds).

Figure 15 shows a case where the photomultiplier 27 detects light earlier than the photomultiplier 26 because a position of the light emission is close to the photomultiplier 27 and far from the photomultiplier 26 (L2<<L1). In this case, the wave-height value of the signal of the photomultiplier 27 is high, and the wave-height value of the signal of the photomultiplier 26 becomes low according to the attenuation as the light propagating. In actual, the propagation speed of light is so fast that the detection time difference of the photomultiplier 26 and the photomultiplier 27 is small (few or several nanoseconds). Therefore, even if the signal processing in the electrical system (processing of the amplifier circuits and the wave-height analysis circuits) is delayed (delayed up to a timing of the signal indicated by a dotted line), the coincidence judgment portion 51a judges as the coincidence if the delay is within the coincidence judgment time period (e.g., 40 nanoseconds - 120 nanoseconds).

Then, in Figure 12 embodiment, by considering an addition value (or total value) of the wave-height value corresponding to the light signal detected by the photomultiplier 26 and the wave-height value corresponding to the light signal detected by the photomultiplier 27 as the signal intensity, regardless of the position or area in the longitudinal direction where tritium makes the solid scintillator emit the light, approximately the same addition value of the wave-height values is obtained even in cases of Figure 13, Figure 14 and Figure 15, preventing a decrease in detection precision due to the detection position.

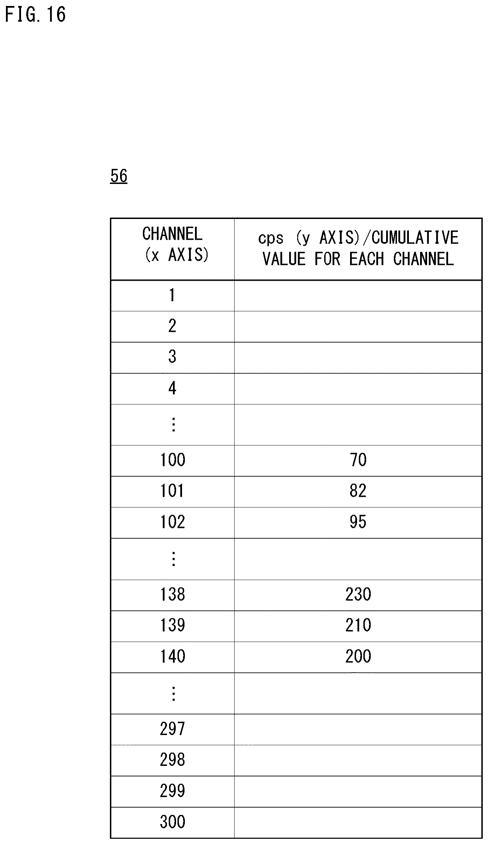

Figure 16 is a view showing schematically a storage manner of the data in an MCA memory 56. The MCA (Multi-channel Analyzer) memory 56 is a memory that stores a cumulative value for each wave-height value when there are significant signals for each channel (1 - 300 channels in Figure 9) on the assumption that in the spectrum chart of Figure 9, the horizontal axis (x-axis) is the channel (energy/channel) and the vertical axis (y-axis) is the intensity (intensity/cps).

According to an example of Figure 16, it is possible to see that the cumulative value of the detection frequency of 100 channels is "70", and the cumulative value of the detection frequency of 140 channels is "200", and so on, for example.

Figure 17 - Figure 18 are flowcharts showing a detailed operation of the radiation measurement apparatus 40A of Figure 12. Next, with reference to Figure 12 - Figure 19, the detailed operation of the radiation measurement apparatus 40A shown in Figure 12 will be described.

When a power switch is turned on, in a step S1, measurement conditions (e.g., the signal threshold value for removing an insignificant signal that is not a significant signal, the coincidence judgment time period for judging the coincidence, the threshold values determined in Figure 10 for extracting the spectrum of tritium out of multiple spectrums (e.g., the lower limit value LLD and the upper limit value ULD of the region of interest ROI)) are input manually.

Specifically describing, in this step S1, the computer or processor (not shown) included in the measurement and judgment circuit 51 displays the GUI (Graphical User Interface) 59 shown in Figure 19 on the display 57, thereby to receive settings of the measurement conditions (parameters) by the operator (measurer).

In the GUI 59 of Figure 19, it is possible to set the measurement time (minutes), the measurement interval (seconds), the signal threshold value (the number of the channels), the coincidence judgment time period (nanosecond: ns), the ROI (Region of Interest: the number of channels), the judgment condition (Bq/L), etc., respectively.

As to the measurement time, it is possible to set, in a pulldown menu, an arbitrary value that conforms to the measurement specification within a range for one (1) minute to ten (10) minutes, for example.

As to the signal threshold value, it is necessary to set a signal threshold value A for the signal processing system A (amplifier circuit 46 and wave-height analysis circuit 48) on a side of the photomultiplier 26 and a signal threshold value B for the signal processing system B (amplifier circuit 47 and wave-height analysis circuit 49) on a side of the photomultiplier 27. It is because characteristics (sensitivity etc.) of the signal processing system A and the signal processing system B are different from each other. Therefore, only a single signal threshold is needed to be set here, as long as the characteristics of both signal processing systems have been made to be matched by the amplifier circuits 48 and/or the amplifier circuits 49. The signal threshold values A and B are all can be set in the pulldown menu.

The coincidence judgment time period may be set within a range of 40 to 120 nanoseconds, for example. This can be set in the pulldown menu.

The region of Interest ROI is set with both the lower limit value LLD and the upper limit value ULD as the number of the channels. All can be set in the pulldown menu.

The judgment condition is set such that a good value is less than X1 (Bq/L) and a bad value is equal to or larger than X1 (Bq/L). That is, the standard value X1 is set. It is possible to set in the pulldown menu.

The GUI 59 is provided with a start button 59a that instructs a measurement start and a stop button 59b. The start button 59a is operated when starting measurement, and the stop button 59b is operated when stopping the measurement forcibly.

Although a setting numeral value(s) can be set by selecting in a pulldown menu(s) in the embodiment of Figure 19, it should not be limited to this, and a numeral value(s) may be directly input using a keyboard, for example.

When the start button 59a (Figure 19) is operated in a step S3, following measurement processing will be started.

First, it is determined, in a step S5, whether the measurement is performed correctly. This determination is performed based on whether the photomultipliers 26 and 27 detect certain light and generate the electrical signals and as a result, the signal processing circuits 48d and 48d generate the digital values in proportion to the light intensity.

If the measurement is not performed correctly, this is determined in the step S5, and an error signal is output in a next step S7, thereby to interrupt measurement. In this case, the measurement is terminated as it is. In this situation, staffs will take measures such as investigating the cause etc.

On the other hand, if it is determined that the measurement is being performed correctly, the process proceeds to a step S9.

In the step S9, the electrical signal (analog signal) detected by the photomultiplier 26 is waveformed by the waveforming circuit 48a, and A/D converted by the A/D conversion circuit 48b, and a wave-height value (digital value) is counted by the counter circuit 48c. The wave-height value counted by the counter circuit 48c is subjected, in the signal processing circuit 48d, to threshold value discrimination using the threshold value set by the threshold value setting portion 54. It is for removing the insignificant signal and extracting the significant signal. That is, when a minimum value that is for selecting the significant signal renders as a threshold value, the spectrum due to the threshold value is changed, and selecting an effective component of tritium utilizing this changed spectrum is called "threshold value discrimination".

Similarly, the electrical signal (analog signal) detected by the photomultiplier 27 is waveformed by the waveforming circuit 49a, and A/D converted by the A/D conversion circuit 49b, and a wave-height value (digital value) is counted by the counter circuit 49c. The wave-height value counted by the counter circuit 49c is subjected, in the signal processing circuit 49d, to threshold value discrimination using the threshold value set by the threshold value setting portion 54. It is for removing the insignificant signal and extracting the significant signal.

When it is judged in the step S9 that the wave-height value exceeds the signal threshold value, the wave-height value of the light signal detected by the photomultiplier 26 and the wave-height value of the light signal detected by the photomultiplier 27 are output to the coincidence judgment potion 51a.

In a step S11, the coincidence judgment portion 51a determines whether the wave-height value of the light signal detected by the photomultiplier 26 and the wave-height value of the light signal detected by the photomultiplier 27 occur within the predetermined coincidence judgment time period (e.g., 40 nanoseconds - 120 nanoseconds). At this time, if it is determined that it is not within the coincidence judgment time period, in a step S13, processing for a case where no significant signal is detected within the coincidence judgment time period is executed. That is, without calculating the cumulative value of the wave-height value by considering the insignificant signal as a noise, and the process returns to the step S5.

On the other hand, if it is determined that it is within the coincidence judgment time period, the process proceeds to a step S15.

In the step S15, the coincidence judgment portion 51a applies write instructions to the wave-height value storage portions 55a and 55b so as to make the wave-height value (the first wave-height value) of the light signal detected by the photomultiplier 26 be written in the wave-height value storage portion 55a and the wave-height value (the second wave-height value) of the light signal detected by the photomultiplier 27 be written in the wave-height value storage portion 55b.

In a step S17, the addition operation portion 51b adds the wave-height value of the light signal detected by the photomultiplier 26 and the wave-height value of the light signal detected by the photomultiplier 27 to obtain a sum of the both, and the addition value of the wave-height values is added to the last cumulative value corresponding to the channel of the MCA memory 56, thereby to be updated and written as the newest cumulative value. In this case, the addition value corresponds to the numeral value of the channel (the value of the x axis, i.e., energy value).

In a step S19, it is determined, based on the time count by the timer (not shown), for example, whether the predetermined measurement time (e.g., arbitrary time period for one minute to ten minutes) having been set on the GUI 59 (Figure 19) elapses. When it is determined that the predetermined measurement time does not elapse, the process returns the step S5, thereby to repeat the steps S5 - S17. As a result, the cumulative value at the time of the measurement time elapsed will be written for each channel of the MCA memory 56.

Accordingly, the addition value of the wave-height value by the photomultiplier 26 and the wave-height value by the photomultiplier 27 that are sequentially measured in the measurement time are added to the last cumulative value corresponding to the channel in the MCA memory 56, thereby to be updated and written as the newest cumulative value. These operations are repeated until the predetermined measurement time elapses.

Thus, the steps S5 - S19 are repeatedly executed for every measurement time interval set on the GUI 59 (Figure 19). As a result, the spectrum at the time of the measurement time elapsed (cumulative value for each channel) is written in each channel of the MCA memory 56.

On the other hand, if it is determined in the step S19 that the predetermined measurement time elapsed, the process proceeds to a step S21. That is, in the step S21, the judgment operation portion 51c calculates the spectrum in the last measurement time based on the cumulative value for each channel stored in the MCA memory 56. The judgment operation portion 51c determines, in a step S23, whether the spectrums of all the channels have been operated, and if it is determined that all calculations have not been ended, the process returns to the step S21 to repeat the processing of the steps S21 and S23.

If it is determined, in the step S23, that the operations of the spectrums for all the respective channels have been ended, in a step S25, the judgment operation portion 51c displays the spectrums (calculated in the step S21) based on the cumulative value for each channel stored in the MCA memory 56 on the display 57.

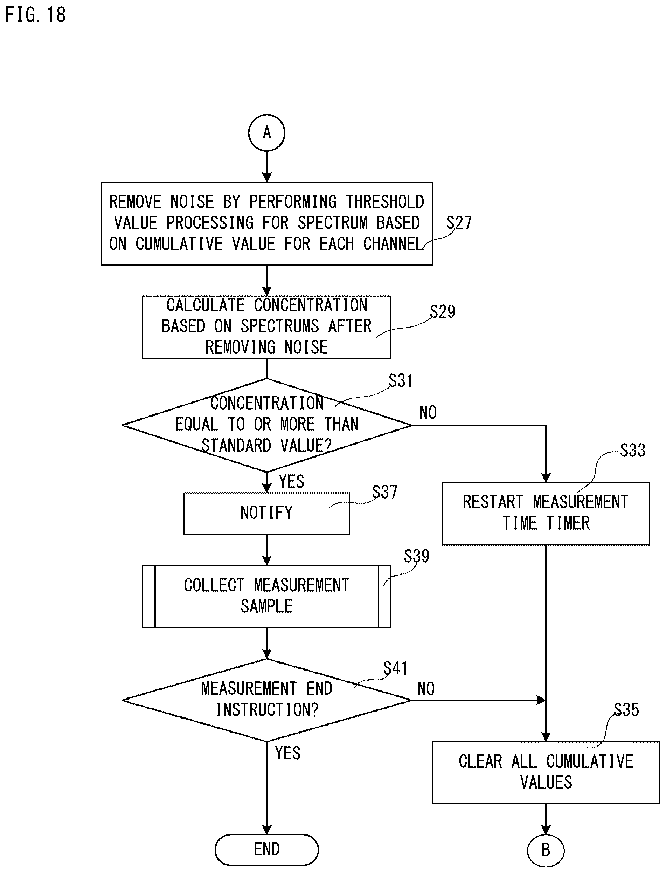

In a subsequent step S27 (Figure 18), the noise component is removed by performing, with the predetermined threshold value (lower limit value LLD of ROI), the threshold value discrimination of the spectrum that is based on the cumulative value for each channel of the MCA 56. Thus, if the threshold value discrimination is performed with the lower limit value LLD, only the spectrum that is based on the cumulative value according to the tritium-derived signal component is separated and thus extracted, the spectrum according to the noise component is removable.

After performing noise removal in the step S27, in a step S29, the tritium concentration during the measurement time is calculated based on the integrated intensity of the tritium spectrum.

Here, the concentration calculation will be described.

As described previously, in the radiation measurement apparatus, the energy (usually indicated using keV) of the radiation to be measured (tritium) and the counting rate at that time (counting for one second, usually indicated using cps (counts per second)) are obtained. This is generally called spectrum.

Using standard samples with known concentration (usually about five types), a spectrum for each concentration is obtained in advance, and after the end of measurement, a total sum of the counting rate of the region of interest (ROI) (referred to as integrated intensity) at this time is obtained. For example, as can be seen in the graph when the lower limit value LLD is set to "40" in Figure 10, it is composed of a relatively large tritium-derived peak and a peak that appears slightly lower part due to the phosphorescence (in the solid scintillator, light energy is latent in the scintillator and emits spontaneously even if there is no radioactive substance in the scintillator. This is called phosphorescence. ).

If obtaining a relationship between the concentration and the integrated intensity by plotting the concentration of the standard sample on the horizontal axis and the integrated intensity on the vertical axis, the relationship between the concentration y and the integrated intensity x will become a straight line shown by an equation (3) (described later) theoretically. However, due to measurement variations and statistical errors, the result may deviate slightly from the straight line, but by applying the least squares method, it is deemed to be the straight line. This straight line is called a calibration curve (e.g., Figure 11).

The calibration curve may differ dependent on the measurement conditions. For example, if the coincidence judgment time periods differ, a gradient of the calibration curve may differ as shown in Figure 11 and Figure 20 (described later). For example, the longer the coincidence judgment time period, the larger the gradient.

How to obtain the concentration of the sample of unknown concentration from the measurement data is as follows.

(1) Measuring about five standard samples of known concentration in advance to obtain the integrated intensity of a region of ROI.

(2) Separating the tritium-derived peak from the phosphorescence-derived peak through the waveform processing (Gaussian waveform separation) of the obtained spectrum.

(3) Preparing the above-described calibration curve by plotting the tritium-derived integrated intensity for each concentration in a graph, thereby obtaining, by the least squares method, for an equation of the calibration curve as the following equation (3).

(4) Obtaining the concentration x, using the calibration curve, from the integrated intensity y of the ROI region of the tritium-derived component of an unknown sample.

[Equation 3]

$$y = ax + b \qquad\qquad --- (3)$$

Here, y denotes the integrated intensity, x denotes the concentration, a denotes the gradient of the calibration curve and b denotes the backgrounds at the time of the concentration 0 (zero).

Thus, it is possible to obtain the radiation concentration. For that purpose, the computer of judgment operation portion 51c, i.e., measurement and judgment circuit 51 shown in Figure 12 is set previously with a function indicated by the equation (3), and then, by substituting the integrated intensity (spectrum) y having been stored in the MCA memory 56 for the equation (3), the concentration x (Bq/L) can be calculated.

In a step S31, it is judged, in the judgment operation portion 51c, whether the concentration thus calculated is equal to or larger than the standard value (good value) (e.g., 1,500 Bq/L) set by the GUI 59.

If it is determined that the concentration does not exceed the standard value, in a next step S33, by restarting a measurement time timer (not shown) to prepare processing of the next measurement time.

In a subsequent step S35, after clearing the cumulative values of all the channels having been stored in the MCA memory 56 and preparing the processing of the next measurement time, the process returns to the aforementioned step S5.

Then, by repeating the processing of the steps S5 - S31, the operation of the cumulative value for each channel in the next measurement time, the operation of the spectrum of tritium and the judgment on whether to exceed the standard value are performed.

On the other hand, if it is determined in the aforementioned step 31 that the concentration exceeds the standard value, the process proceeds to a step S37 to notify that the radiation concentration exceeds the standard value. As to a method of such notification, it is considered to alarm by a voice "treated water with the concentration exceeding the standard value is measured", to display a message on the display 57, to display the spectrum of tritium shown in Figure 10 in addition to displaying characters, and so on.

In a subsequent step S39, the control circuit 52 makes the electromagnetic valve 53i close to stop supplying the liquid sample, and the electromagnetic valve 53r open to collect the liquid sample exceeding the standard value in the test path 41 through the collection port 414 and the collection pipe 43r. Therefore, when the liquid sample exceeding the standard value is measured, the liquid sample is prevented from being released from the discharge port 413 and the drainage pipe 43o.

Then, it is determined, in a step S41, whether there is an instruction to end the measurement within a predetermined standby time period from the time of the notification in the step S37. When determined that there is the instruction to end the measurement, a series of measurement operations is terminated.

In addition, when there is no instruction to end the measurement within the predetermined standby time period, after executing the aforementioned processing in the step S35, the process returns to the step S5 to continue the measurement operation again.

[Countermeasure against phosphorescence]

Although the judgment time period of few or several nanoseconds is essentially sufficient for the coincidence judgment, it is confirmed through experiments that the coincidence judgment time period of 40 nanoseconds or more is necessary due to signal processing time. On the other hand, it is also confirmed that there is erroneous coincidence judgment due to phosphorescence etc. within this judgment time period.

If the judgment time period for the coincidence is made long, the counting rate of tritium increases apparently. This is thought to be because the coincidence event is sensed by measuring tritium and counting phosphorescence, and the number of the coincidence event increases in proportion to the judgment time period.

Figure 20 shows, as similar to Figure 11(A), the counting rate of the coincidence against the change of the concentration when changing the coincidence judgment time period with 40 nanoseconds, 80 nanoseconds and 120 nanoseconds. Since the counting rate of the coincidence differs even the same concentration if the coincidence judgment time period is made longer as shown in Figure 20, it is necessary to eliminate the influence due to the phosphorescence in the solid scintillator as much as possible.

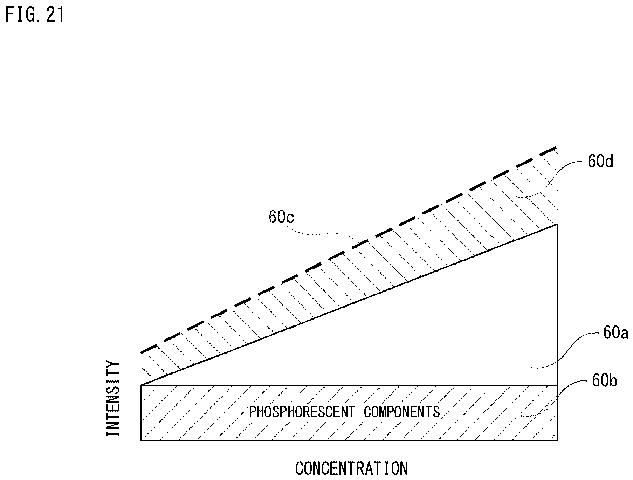

That is, due to the influence of the phosphorescence, the intensity becomes large apparently as shown in Figure 21. In Figure 21, an area 60b (based only on phosphorescence component) below an area 60a showing the tritium component indicates a height raising part according to the phosphorescence. Moreover, an area 60d appears due to the coincidence detection of tritium and the phosphorescence, under this influence, the calibration curve 60c that the coincidence according to tritium and the phosphorescence (area 60d) is added to only tritium (area 60a) appears.

The inventors et al. reviewed an improvement according to the number of the solid scintillators and a segmentation of a detection sensable area, based on the foresight that the influence by the phosphorescence component changes with the number of the solid scintillators and the segmentation of the detection sensable area.

The inventors et al. experimented using the radiation measurement apparatus 40A shown in Figure 12.

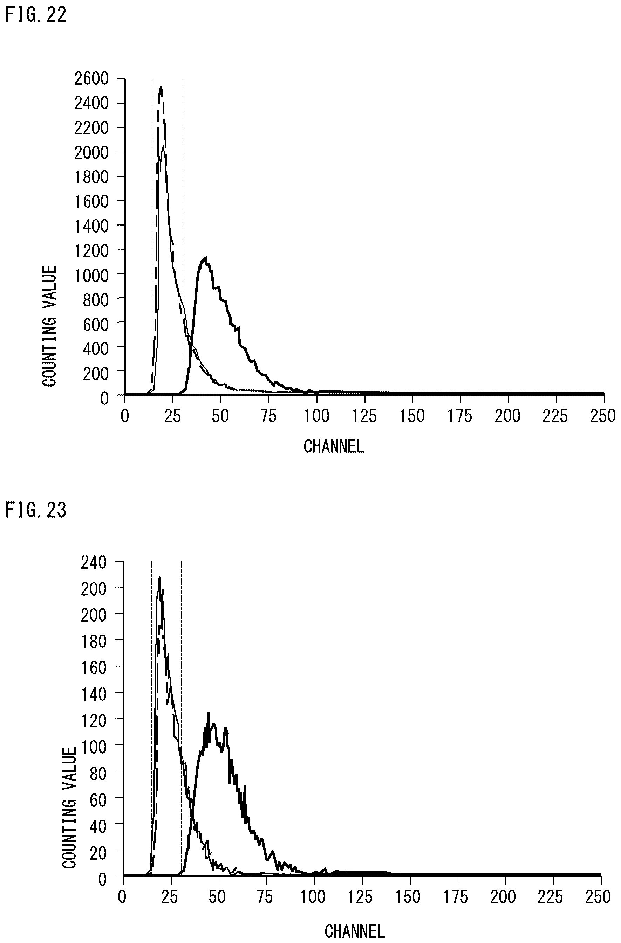

In the experimentation, a result of a first experimental system in which the number of the solid scintillators 32 is 476 and the photomultipliers 26 and 27 of the large-diameter glass tubes are used to receive the light from those solid scintillators and a result of a second experimental system using the solid scintillators of 16 and the photomultipliers 26 and 27 of the small-diameter metal tube are compared with each other. The result of the first experimental system is shown in Figure 22, and the result of the second experimental system is shown in Figure 23. These Figures 22 and Figure 23 are corresponding to Figure 9 described previously, and the count value is indicated on the vertical axis and the channel is indicated on the horizontal axis, respectively.

As shown in Figure 22 and Figure 23, a coincidence detection rate according to the first experimental system was 37 cps/476, and the detection rate per a single solid scintillator was 0.08 cps. A coincidence detection rate according to the second experimental system was 5.6 cps/16, and the detection rate per a single solid scintillator was 0.35 cps.

This indicates that the second experimental system having fewer solid scintillators than the first experimental system is approximately four times more efficient. This result brings about the following knowledge.

When there are few numbers of the solid scintillators, the counting efficiency of tritium becomes small, but since the probability of the phosphorescence that contributes to the coincidence judgment to the tritium measurement decreases, it is thought that a high quality (i.e., there is little influence of phosphorescence) spectrum is obtained.

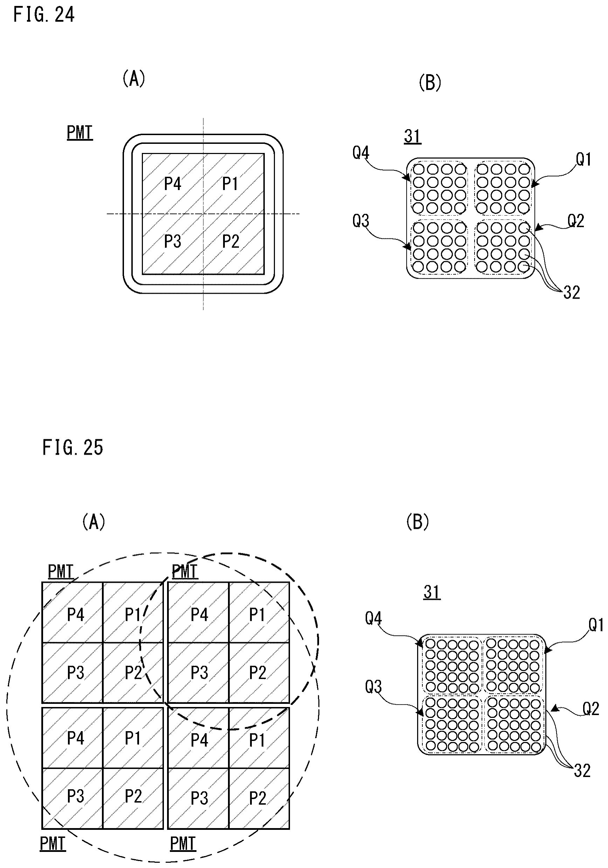

Based on the knowledge shown by such experimental results, the inventors et al. decided to use a four-segmentation type photomultiplier PMT (Photomultiplier tube) as shown in Figure 24(A) as the photomultipliers 26 and 27.

This photomultiplier PMT is "R1126U-200-M4" manufactured by Hamamatsu Photonics K.K., for example, and areas P1 - P4 each corresponds to the photomultipliers 26 and 27 used in the above-described embodiment. That is, each of the areas P1 - P4 is corresponding to a single photomultiplier. Each of the areas P1 - P4 corresponds to each of scintillator groups Q1 - Q4 provided on the scintillator column 31 shown in Figure 24(B), each of which includes the solid scintillators 32 of 16 (=4x4). That is, each of the areas P1 - P4 of the photomultiplier PMT receives the light from 16 solid scintillators included in each of the scintillator groups Q1 - Q4. Therefore, when using the photomultiplier PMT of Figure 24 (A), a series of measurement system shown in Figure 12, for example is needed in correspondence to each of the areas P1 - P4.

An embodiment shown in Figure 25 constitutes the radiation measurement apparatus 40A (Figure 12) using 4 (four) four-segmentation photomultipliers PMT as shown in Figure 24. As a scintillator of this embodiment, a scintillator column 31 as shown in Figure 25(B) is used. The scintillator column 31 includes four scintillator groups Q1 - Q4 each of which includes 25 solid scintillators 32 and thus has 400 solid scintillators as a whole.

In Figure 25 embodiment, each of the areas P1 - P4 of the photomultiplier PMT of Figure 25(A) can take charge of 25 solid scintillators of each of the scintillator groups Q1 - Q4 of the scintillator column 31 shown in Figure 25(B). That is, since a single photomultiplier PMT can respond to 100 solid scintillators, a usable radiation measurement apparatus with 400 solid scintillators is realizable by using the four photomultipliers PMT.

Although the counting efficiency of tritium becomes small when there are few numbers of solid scintillators as described previously with reference to Figure 21 - Figure 24, since the probability of the phosphorescence that influences the coincidence judgment to tritium measurement becomes small, according to Figure 25 embodiment, it becomes possible to prepare a measurement system that is less affected by the phosphorescence.

However, since a measurement system is required for each area P, Figure 25 embodiment uses four photomultipliers PMT, so 16 (= 4 x 4) measurement systems are required. That is, for each area of the photomultiplier PMT, the amplifier circuits 46 and 47, the wave-height analysis circuits 48 and 49, the measurement and judgment circuit 51, the threshold value setting portion 54 and the wave-height value storage portions 55a and 55b all shown in Figure 12 will be provided. Then, it is possible to obtain a whole concentration by totaling the concentrations obtained by the respective judgment operation portions 51c.

If the number of the solid scintillators belonging to a single scintillator group Q is as "X" as in this embodiment, the total number N of the solid scintillators in a single scintillation column 31 that has Y scintillator groups Q becomes as "X x Y". In this case, if using a pair of photodetectors ((e.g., photomultiplier) 26 and 27 (Figure 12)) with respect to each scintillator group Q, it is possible to realize the radiation detection apparatuses 10 and 20 and the radiation measurement apparatuses 40 and 40A capable of reducing the influence of the phosphorescence component.

That is, by providing the scintillator column including a plurality of scintillator groups in each of which two or more solid scintillators are arranged, and a plurality of photodetectors each corresponding to each of the plurality of scintillator groups in both sides to sandwich the scintillator columns, it is possible to realize the radiation detection apparatuses 10 and 20 and the radiation measurement apparatuses 40 and 40A capable of reducing the influence of the phosphorescence component.

In addition, a sampling evaluation in the experiment by the inventors et al. is well below a regulatory standard, but since this is an indicator for pursuing greater security and safety, the releasing control with the interval of 500 seconds would be sufficient. In this case, although the measurement is performed by sealing the liquid sample for 500 seconds in the test path 41 (measurement chamber), since the radiation measurement apparatuses 40 are installed in parallel to each other, it is a possible to perform the continuous measurement artificially.

[Application examples of a test sample other than liquid sample]

In the above-described embodiment is described for a case where the test sample is a liquid sample such as a treated water (tritium) of a nuclear power plant; however, the technical concept of this disclosure is, of course, applicable to applications for detecting test samples other than liquids, such as gases containing gaseous tritium (HT: gas or water vapor in which H in H2 hydrogen is replaced with T (tritium)) or sherbet-like tritiated water.

In addition, the test sample of gases or sherbet cannot be mixed with the liquid scintillator, and thus, cannot be tested by the liquid scintillator, but by using the radiation detection apparatus 10, 20, 20A or 30 of this disclosure, such a test sample becomes testable.

Moreover, needless to say, not only tritium but also a low-energy radioactive substance such as C-14, Co-60, Sr-90, Ru-106, Sb-125 or I-129 becomes a target as a test sample.

Moreover, the structure of the radiation detection apparatus and the radiation measurement apparatus and specific numerals described in the above-described embodiments are mere examples not to be limited and can be appropriately changed according to actual products.

Although the specific exemplary system, method, apparatus and the instrument are described, it is to be understood that the appended claims are not limited to the disclosed system, method, apparatus and instrument, but are intended to cover various modifications and equivalent arrangements that fall within the scope of the appended claims.

**Description of numerals**

10, 20, 20A, 30: radiation detection apparatus
11, 21, 21A, 31: scintillator column (scintillator unit)
12a, 12b, 22a - 22p, 32: solid scintillator

13, 23, 33: support member
16, 26, 27: photodetector
131a, 131b, 132a, 132b, 231a, 231e, 232i, 232m: hole (throughhole)
235: holding fixture
40, 40A: radiation measurement apparatus
1, 41: test path (measurement chamber)
26, 27: photomultiplier
42: mount
46, 47: amplifier circuit
48, 49: wave-height analysis circuit
51: measurement and judgment circuit
52: control circuit
53i, 53r: electromagnetic valve
51a: coincidence judgment portion
51b: addition operation portion
51c: judgment operation portion
56: MCA memory

**Claims**

1. A radiation detection apparatus for detecting a radioactive substance contained in a test sample supplied to a measurement chamber, comprising:

   a scintillator column that includes a plurality of longitudinal solid scintillators and a support member for fixedly supporting the plurality of solid scintillators, and is arranged in the measurement chamber, wherein
   the support member has structure that supports both end portions of the plurality of solid scintillators so that the plurality of solid scintillators are in a predetermined arrangement relationship that the plurality of solid scintillators are separated from each other with small gaps through which the test sample can pass, and
   each of the plurality of solid scintillators emits light in response to contact with the radioactive substance contained in the test sample, and confines the light inside and leads the light to the both ends in a longitudinal direction, further comprising:
   a first photodetector arranged outside a test path in a position opposite to one end portion of each of the solid scintillators; and
   a second photodetector arranged outside the test path in a position opposite to another end portion of each of the solid scintillators.

2. The radiation detection apparatus according to Claim 1, wherein the scintillator column includes a plurality of scintillator groups each including a plurality of solid scintillators, and the first photodetector and the second photodetector are respectively provided in plural number corresponding to the plurality of scintillator groups and each first photodetector and each second photodetector receive the light from the plurality of solid scintillators included in the corresponding scintillator group.

3. The radiation detection apparatus according to Claim 1, wherein the support member is formed in a frame shape including a pair of plate-like portions, one plate-like portion and another plate-like portion of the pair of plate-like portions have holding portions formed at a plurality of positions corresponding to each other, and
   the support member supports the plurality of solid scintillators by holding one end portion and another end portion of each of the solid scintillators with corresponding holding portions of the pair of plate-like portions.

4. The radiation detection apparatus according to Claim 3, wherein the holding portions include throughholes formed at the plurality of positions corresponding to each other in the one plate-like portion and the other plate-like portion of the pair of plate-like portions, and each of the solid scintillators is held by the throughholes formed at positions corresponding to each other.

5. The radiation detection apparatus according to Claim 3, wherein the holding portions include holding fixtures respectively provided at a plurality of positions corresponding to each other on inner surfaces opposite to each other of the one plate-like portion and the other plate-like portion of the pair of plate-like portions, and each of the solid scintillators is held by the holding fixtures provided at the corresponding positions.

6. The radiation detection apparatus according to Claim 3, wherein the first photodetector is arranged to face the one end portion in the longitudinal direction of each solid scintillator and to be brought into contact to the one plate-like portion and the second photodetector is arranged to face the other end portion in the longitudinal direction of each solid scintillator and to be brought into contact to the other plate-like portion, and

both a first electrical signal detected by the first photodetector and a second electrical signal detected by the second photodetector are utilized to detect a radiation concentration in the test sample.

7. The radiation detection apparatus according to Claim 1, wherein the support member arranges the plurality of solid scintillators in a matrix manner by arranging the plurality of solid scintillators with predetermined gaps in a longitudinal direction and in a lateral direction.

8. A radiation measurement apparatus for detecting a concentration of radioactive substance contained in a test sample supplied to a measurement chamber, comprising:

a scintillator column that includes a plurality of longitudinal solid scintillators and a support member for fixedly supporting the plurality of solid scintillators, and is arranged in the measurement chamber, wherein the support member has structure that supports both end portions of the plurality of solid scintillators so that the plurality of solid scintillators are in a predetermined arrangement relationship that the plurality of solid scintillators are separated from each other with small gaps through which the test sample can pass, and each of the plurality of solid scintillators emits light in response to contact with the radioactive substance included in the test sample, and confines the light inside and leads the light to the both ends in a longitudinal direction, further comprising:

a first photodetector arranged outside the measurement chamber in a position opposite to one end portion of each of the solid scintillators, which receiving the light from the corresponding plurality of solid scintillators and outputting an electrical signal according to an amount of the light received;
a second photodetector arranged outside the measurement chamber in a position opposite to another end portion of each of the solid scintillators, which receiving the light from the corresponding plurality of solid scintillators and outputting an electrical signal according to an amount of the light received;
a first wave-height analysis portion that processes the electrical signal that is output from the first photodetector to output a first electrical signal;
a second wave-height analysis portion that processes the electrical signal that is output from the second photodetector to output a second electrical signal;
a coincidence judgment portion that judges whether the first electrical signal and the second electrical signal occur within a coincidence judgment time period and presumes that the first electrical signal and the second electrical signal are significant signals when it is judged that the first electrical signal and the second electrical signal occur within the coincidence judgment time period; and
a concentration calculation portion that obtains a radiation concentration based on a cumulative value, for each channel, of an addition value of a first wave-height value of the first electrical signal and a second wave-height value of the second electrical signal presumed by the coincidence judgment portion to be significant electrical signals.

9. The radiation measurement apparatus according to Claim 8, wherein the concentration calculation portion includes a storage portion that stores for each channel the cumulative value of the addition value of the first wave-height value and the second wave-height value of the first electrical signal and the second electrical signal presumed by the coincidence judgment portion to be significant electrical signals, and a calculation portion that obtains a spectrum based on the cumulative value for each channel stored in the storage portion within a predetermined time period, whereby the concentration of the radiation that is a measurement target can be calculated based on an integrated intensity of a specific spectrum.

10. The radiation measurement apparatus according to Claim 9, wherein the calculation portion includes a threshold value discrimination portion that extracts a spectrum of the radioactive substance that is the measurement target by performing threshold discrimination with a predetermined threshold value for a plurality kinds of spectrums contained in the spectrum, and obtains a concentration of the radioactive substance from the integrated intensity of extracted spectrum of the radioactive substance, and it is judged that the measurement sample contains the radiation substance exceeding a predetermined standard value when it is determined that the concentration exceeds the predetermined standard value.

EP 4 682 591 A1

11. The radiation measurement apparatus according to Claim 9, wherein the scintillator column includes a plurality of scintillator groups each including a plurality of solid scintillators, and the first photodetector and the second photodetector are respectively provided in plural number corresponding to the plurality of scintillator groups and each first photodetector and each second photodetector receive the light from the plurality of solid scintillators included in the corresponding scintillator group, and
the first wave-height analysis portion, the second wave-height analysis portion, the coincidence judgment portion and the storage portion are provided to be related with each of the plurality of first photodetectors and each of the plurality of second photodetectors, respectively.

12. The radiation measurement apparatus according to Claim 8, wherein the support member is formed in a frame shape including a pair of plate-like portions, one plate-like portion and another plate-like portion of the pair of plate-like portions have holding portions formed at a plurality of positions corresponding to each other, and
the support member supports the plurality of solid scintillators by holding one end portion and another end portion of each of the solid scintillators with corresponding holding portions of the pair of plate-like portions.

FIG. 1

(A)

LIQUID SAMPLE
(DISCHARGED)

(B)

LIQUID SAMPLE
(SUPPLIED)

FIG. 2

FIG. 3

FIG. 4

(A)

(B)

FIG. 5

(A)

(B)

FIG. 6

FIG. 7

FIG. 8

FIG. 9

FIG. 10

FIG. 11

(A)

(B)

FIG. 12

FIG. 13

(A)

TR

12a (12b)

L2 (L-L1)      L1

L

(B)                    SAME WAVE-
                       HEIGHT VALUE

(C)                    SAME WAVE-
                       HEIGHT VALUE

1 NANOSECOND

FIG. 14

12a (12b)

(A)            TR

L2            L1

L

(B)                    HIGH WAVE-
                       HEIGHT VALUE

FEW NANOSECONDS

(C)                    LOW WAVE-
                       HEIGHT
        COINCIDENCE    VALUE
        EVENT TIME

40 NANOSECONDS - 120 NANOSECONDS

FIG. 15

(A)      TR

12a (12b)

L2          L1

L

(B)                    LOW WAVE-
                       HEIGHT VALUE

(C)                    HIGH WAVE-
                       HEIGHT VALUE
        COINCIDENCE
        EVENT TIME

40 NANOSECONDS - 120 NANOSECONDS

FIG. 16

56

| CHANNEL<br>(x AXIS) | cps (y AXIS)/CUMULATIVE<br>VALUE FOR EACH CHANNEL |
|---|---|
| 1 | |
| 2 | |
| 3 | |
| 4 | |
| ⋮ | |
| 100 | 70 |
| 101 | 82 |
| 102 | 95 |
| ⋮ | |
| 138 | 230 |
| 139 | 210 |
| 140 | 200 |
| ⋮ | |
| 297 | |
| 298 | |
| 299 | |
| 300 | |

FIG. 17

START

INPUT MEASUREMENT CONDITIONS — S1

IS START SWITCH ON? — S3
NO
B
YES

IS MEASUREMENT NORMAL? — S5
NO → INTERRUPT PROCESSING OF MEASUREMENT — S7
YES

DOES WAVE-HEIGHT VALUE EXCEED THRESHOLD VALUE? — S9
NO
YES

WITHIN COINCIDENCE JUDGMENT TIME PERIOD? — S11
NO → NOISE PROCESSING (NOT CALCULATE CUMULATIVE VALUE) — S13
YES

STORE WAVE-HEIGHT VALUE — S15

UPDATE AND STORE CUMULATIVE VALE — S17

MEASUREMENT TIME ELAPSED? — S19
NO
YES

CALCULATE SPECTRUM BASED ON CUMULATIVE VALUE FOR EACH CHANNEL — S21

CALCULATION OF ALL CHANNELS ENDED? — S23
NO
YES

DISPLAY SPECTRUMS ON DISPLAY — S25

A

FIG. 18

A

REMOVE NOISE BY PERFORMING THRESHOLD
VALUE PROCESSING FOR SPECTRUM BASED
ON CUMULATIVE VALUE FOR EACH CHANNEL — S27

CALCULATE CONCENTRATION
BASED ON SPECTRUMS AFTER
REMOVING NOISE — S29

S31
CONCENTRATION
EQUAL TO OR MORE THAN
STANDARD VALUE? — NO

YES — S37

NOTIFY

COLLECT MEASUREMENT
SAMPLE — S39

S41
MEASUREMENT END
INSTRUCTION? — NO

YES

END

RESTART MEASUREMENT
TIME TIMER — S33

CLEAR ALL CUMULATIVE
VALUES — S35

B

FIG. 19

<u>59</u>

| MEASUREMENT TIME (MINUTE) | ▼ |
| SIGNAL THRESHOLD VALUE (CHANNEL) | ▼ |
| COINCIDENCE JUDGMENT TIME PERIOD (nsec) | ▼ |
| LOWER LIMIT VALUE OF ROI (CHANNEL) | ▼ |
| UPPER LIMIT VALUE OF ROI (CHANNEL) | ▼ |
| JUDGMENT CONDITION (Bq/L) | ▼ |

59a
START

59b
STOP

FIG. 20

FIG. 21

FIG. 22

FIG. 23

FIG. 24

(A)

(B)

FIG. 25

(A)

(B)

## INTERNATIONAL SEARCH REPORT

| International application No. |
|---|
| **PCT/JP2024/010001** |

| A. CLASSIFICATION OF SUBJECT MATTER |
|---|
| ***G01T 1/167***(2006.01)i; ***G01T 1/20***(2006.01)i; ***G01T 7/02***(2006.01)i<br>FI: G01T1/167 A; G01T1/167 J; G01T1/20 B; G01T7/02 A; G01T1/20 D |
| According to International Patent Classification (IPC) or to both national classification and IPC |

| B. FIELDS SEARCHED |
|---|
| Minimum documentation searched (classification system followed by classification symbols)<br>G01T1/00-1/16; G01T1/167-7/12 |
| Documentation searched other than minimum documentation to the extent that such documents are included in the fields searched<br>Published examined utility model applications of Japan 1922-1996<br>Published unexamined utility model applications of Japan 1971-2024<br>Registered utility model specifications of Japan 1996-2024<br>Published registered utility model applications of Japan 1994-2024 |
| Electronic data base consulted during the international search (name of data base and, where practicable, search terms used) |

| C. | DOCUMENTS CONSIDERED TO BE RELEVANT |

| Category* | Citation of document, with indication, where appropriate, of the relevant passages | Relevant to claim No. |
|---|---|---|
| A | JP 61-160079 A (HITACHI, LTD.) 19 July 1986 (1986-07-19)<br>p. 2, upper left column, line 18 to p. 3, upper left column, line 7, fig. 1 | 1-12 |
| A | JP 63-032390 A (CHUBU ELECTRIC POWER CO., INC.) 12 February 1988 (1988-02-12)<br>p. 3, upper right column, line 8 to lower right column, line 11, fig. 1 | 1-12 |
| A | JP 5-209965 A (ALOKA CO., LTD.) 20 August 1993 (1993-08-20)<br>paragraphs [0011], [0012], fig. 2 | 1-12 |
| A | JP 2007-178336 A (MITSUBISHI ELECTRIC CORPORATION) 12 July 2007 (2007-07-12)<br>abstract, fig. 1 | 1-12 |
| A | US 2009/0261261 A1 (CANBERRA ALBUQUERQUE, INC.) 22 October 2009 (2009-10-22)<br>paragraphs [0034]-[0048], fig. 1-4 | 1-12 |
| A | CN 104199080 A (SHANGHAI INSTITUTE OF APPLIED PHYSICS) 10 December 2014 (2014-12-10)<br>abstract, fig. 2 | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 April 2024** | **07 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/010001**

| Patent document cited in search report | | | Publication date (day/month/year) | Patent family member(s) | Publication date (day/month/year) |
|---|---|---|---|---|---|
| JP | 61-160079 | A | 19 July 1986 | (Family: none) | |
| JP | 63-032390 | A | 12 February 1988 | (Family: none) | |
| JP | 5-209965 | A | 20 August 1993 | (Family: none) | |
| JP | 2007-178336 | A | 12 July 2007 | (Family: none) | |
| US | 2009/0261261 | A1 | 22 October 2009 | EP 2120065 A2 paragraphs [0024]-[0038], fig. 1-4 | |
| CN | 104199080 | A | 10 December 2014 | (Family: none) | |

Form PCT/ISA/210 (patent family annex) (July 2022)

**REFERENCES CITED IN THE DESCRIPTION**

**Patent documents cited in the description**

- JP 2007178336 A
- JP 54123987 A
- JP 55128179 A
- WO 088006297 A